# EUROPÄISCHE PATENTSCHRIFT

(11) **EP 4 292 025 B1**
(45) Veröffentlichungstag und Bekanntmachung des Hinweises auf die Patenterteilung: **26.06.2024**
(21) Anmeldenummer: 22719793.6
(22) Anmeldetag: 21.04.2022
(51) Int. Cl.: G06N 10/40, G06F 11/30

(54) **VORRICHTUNGEN UND VERFAHREN ZUR ÜBERWACHUNG EINES QUANTENCOMPUTERS IM BETRIEB**
DEVICES AND METHOD FOR MONITORING A QUANTUM COMPUTER IN OPERATION
DISPOSITIFS ET PROCÉDÉS DE SURVEILLANCE D'UN ORDINATEUR QUANTIQUE EN FONCTIONNEMENT

(30) Priorität: 28.04.2021 DE 102021110964
(43) Veröffentlichungstag der Anmeldung: 20.12.2023
(73) Patentinhaber: Quantum Technologies GmbH, 04103 Leipzig (DE)
(72) Erfinder: BURCHARD, Bernd, 45276 Essen (DE)
(86) Internationale Anmeldenummer: PCT/DE2022/100301
(87) Internationale Veröffentlichungsnummer: WO 2022/228613

(56) Entgegenhaltungen:
- DE-A1- 10 036 278
- Fu X ET AL: "eQASM: An Executable Quantum Instruction Set Architecture", , 9. März 2019 (2019-03-09), XP055777651, Gefunden im Internet: URL:https://arxiv.org/pdf/1808.02449.pdf [gefunden am 2021-02-18]
- Alexander Robert S. Smith ET AL: "A Practical Quantum Instruction Set Architecture", arXiv.org, 17. Februar 2017 (2017-02-17), XP055555269, Gefunden im Internet: URL:https://arxiv.org/pdf/1608.03355.pdf [gefunden am 2019-02-12]
- YILUN XU ET AL: "QubiC: An open source FPGA-based control and measurement system for superconducting quantum information processors", ARXIV.ORG, CORNELL UNIVERSITY LIBRARY, 201 OLIN LIBRARY CORNELL UNIVERSITY ITHACA, NY 14853, 31. Dezember 2020 (2020-12-31), XP081849939,
- COLM A RYAN ET AL: "Hardware for Dynamic Quantum Computing", ARXIV.ORG, CORNELL UNIVERSITY LIBRARY, 201 OLIN LIBRARY CORNELL UNIVERSITY ITHACA, NY 14853, 26. April 2017 (2017-04-26), XP081275840, DOI: 10.1063/1.5006525
- Anonymous: "Intel 'Horse Ridge' Addresses Key Barriers to Quantum Scalability", , 18. Februar 2020 (2020-02-18), XP055954525, Gefunden im Internet: URL:https://newsroom.intel.com/wp-content/ uploads/sites/11/2020/02/Intel-ISSCC-Horse -Ridge-Fact-Sheet.pdf [gefunden am 2022-08-24]

## Beschreibung

### Feld der Erfindung

Die Erfindung richtet sich auf Vorrichtungen und Verfahren zur Überwachung eines Quantencomputers im Betrieb. Dabei steht ein Quantencomputer auf Basis von paramagnetischer Zentren im Vordergrund. Ganz besonders bevorzugt handelt es sich um paramagnetische Zentren in Diamant. Besonders bevorzugt handelt es sich bei einem oder mehreren der paramagnetischen Zentrum um eines oder mehrere der folgenden Zentren in Diamant: NV, SiV, TiV, GeV, SnV, NiN₄, PbV, ST1, L1. In dem hier vorgelegten Dokument stehen Quantencomputer auf der Basis von NV-Zentren in Diamant im Vordergrund. Der Fachmann liest beliebige Kombinationen der vorstehenden paramagnetischen Zentren als mögliche Realisierungen mit. Das hier vorgelegte Dokument verweist in diesem Zusammenhang beispielsweise auf das Dokument WO 2021 083 448 A1.

### Allgemeine Einleitung

Bei der Diskussion von potenziellen Anwendungen von Quantencomputern taucht von Zeit zu Zeit die Frage auf, ob Quantencomputer so eingesetzt werden können, dass sie tatsächlich zuverlässig immer die erwarteten Ergebnisse liefern. Grundsätzlich handelt es sich bei Quantencomputern ja um Systeme, die vorbestimmte Ergebnisse nur mit gewissen Wahrscheinlichkeiten liefern. Insofern unterscheiden sie sich bereits in ihrer Grundzuverlässigkeit erheblich.

Hier geht es aber nicht um eine Fehlerkorrektur von Quantencomputern. Hier geht es stattdessen um eine SIL (Safety Integrity Level) konforme Verhinderung unerlaubter und ggf. sogar gefährlicher Zustände von Systemen, die von Quantencomputern gesteuert werden. Hierzu müssen Fehler in den Quantensystemen, die während des Betriebs auftauchen können erkannt werden können. Es muss verhindert werden, dass die Systeme, die von solchen Quantencomputern gesteuert werden, in unsichere Zustände geraten.

### Stand der Technik

Laut der Schrift Fu X et Al "eQASM: An Executable Quantum Instruction Set Architecture", 9. März 2019, (2019-03-09), XP055777269, https://arxiv.org/pdf/1808.02449.pdf umfasst ein weit verbreitetes Paradigma der Quantenprogrammierung sowohl den Daten-Fluss als auch den KontrollFluss. Bestehende Quanten-Hardware kann den Kontrollfluss nicht gut unterstützen, was die Bandbreite der Quanten-Software, die auf der Hardware ausgeführt werden kann, erheblich einschränkt. Die Autoren der vorstehenden Schrift haben dabei nach eigener Aussage bei der Analyse der Einschränkungen in der Kontroll-Mikroarchitektur festgestellt, dass die bestehenden Quanten-Assemblersprachen entweder zu hochsprachig oder zu eingeschränkt sind, um eine umfassende Fluss-Kontrolle auf der Hardware zu unterstützen. Die Autoren der obigen Schrift geben an, dass bereits beim Quanten-Mikrobefehlssatz QuMIS beobachtet wurde die Quantenbefehlssatz-Architektur (QISA) aufgrund mikroarchitektonischer Beschränkungen unter begrenzter Skalierbarkeit und Flexibilität leiden kann. Es ist It. den Autoren der obigen Schrift eine offene Herausforderung, eine skalierbare und flexible QISA zu entwerfen, die eine umfassende Abstraktion der Quantenhardware bietet. In ihrer Arbeit schlagen die Autoren der obigen Schrift eine ausführbaren QISA vor, genannt eQASM, der aus der Quanten-Assemblersprache (QASM) übersetzt werden kann, ein umfassendes Quantenprogramm mit Fluss-Kontrolle unterstützt und auf einer Quantenkontroll-Mikroarchitektur ausgeführt wird. Mit effizienter Timing-Spezifikation, Single-Operation-Multiple-Qubit-Ausführung und einer Architektur mit sehr langen Befehlswörtern bietet eQASM It. den Autoren der obigen Schrift eine bessere Skalierbarkeit als QuMIS. Die Definition von eQASM konzentriert sich It. den Autoren auf die Assemblerebene, um ausdrucksstark zu sein. Quantenoperationen werden zur Kompilierzeit konfiguriert, anstatt zur QISA-Designzeit definiert zu werden. Die Autoren der obigen Schrift instanziieren eQASM mittels eines 32-Bit-Befehlssatzes, der auf einen supraleitenden Quantenprozessor mit sieben Quantenbits abzielt. Die Autoren der obigen Schrift validierten ihr Design, indem sie mehrere Experimente auf einem Zwei-Qubit-Quantenprozessor durchführten.

Die obige Schrift offenbart nicht, wie sichergestellt werden kann, dass ein von einem Quantencomputer gesteuertes System nicht in einen gefährlichen Zustand geraten kann. Außerdem umfasst sie keine Hinweise auf Quantencomputer mit unterschiedlichen Quantenbits, beispielsweise nukleare Quantenbits oder unterschiedliche parametrische Zentren.

In der Schrift Alexander Robert S. Smith ET AL "A practical quantum instruction set architecture", arXiv.org, 17. Februar 2017 (2017-02-17), XP055555269, https://arxiv.org/pdf/1608.03355.pdf stellen die Autoren eine abstrakte Maschinenarchitektur für klassische Berechnungen/Quantenberechnungen einschließlich Kompilierung vor, sowie eine Quantenbefehlssprache namens Quil zum expliziten Kodieren dieser Berechnungen. Mit diesem Formalismus diskutieren die Autoren der vorstehenden Schrift konkrete Implementierungen der Maschine und nicht-triviale Algorithmen, die auf sie abzielen. Die Einführung dieser Maschine steht nach Aussage der Autoren der vorstehenden Schrift im Einklang mit der laufenden Entwicklung der Quantencomputertechnologie und ermöglicht nach deren Aussage portable Beschreibungen aktueller klassischer Algorithmen /quantentechnologischer Algorithmen. Auch diese Schrift offenbart nicht, wie sichergestellt werden kann, dass ein von einem Quantencomputer gesteuertes System nicht in einen gefährlichen Zustand geraten kann. Außerdem umfasst sie keine Hinweise auf Quantencomputer mit unterschiedlichen Quantenbits, beispielsweise nukleare Quantenbits oder unterschiedliche parametrische Zentren.

### Aufgabe

Dem Vorschlag liegt daher die Aufgabe zugrunde, eine Lösung zu schaffen die die obigen Nachteile des Stands der Technik nicht aufweist und weitere Vorteile aufweist.

Diese Aufgabe wird durch Vorrichtungen und Verfahren der Hauptansprüche gelöst. Weitere Ausgestaltungen sind Gegenstand von Unteransprüchen.

### Lösung der Aufgabe

Die technische Lehre des hier vorgelegten Dokuments schlägt ein Quantencomputersystem (QUSYS) mit einem Quantencomputer (QC) und mit einer Quantencomputerüberwachungsvorrichtung (QUV) vor. Der Quantencomputer (QC) umfasst bevorzugt eine Mehrzahl von Quantenpunkten mit ersten Mitteln. Die ersten Mittel können bevorzugt einzelne oder mehrere oder die Quantenpunkte des Quantencomputers (QC) manipulieren und so deren Quantenzustände modifizieren. Im Sinne dieses Dokuments können die Quantenpunkte beispielsweise paramagnetische Zentren, beispielsweise NV-Zentren in Diamant und/oder nukleare Spins, beispielsweise ¹³C-Isotope in einer ¹²C-Diamant-Matrix sein. Das hier vorgelegte Dokument verweist in diesem Zusammenhang beispielsweise auf das Dokument WO2021083448A1. Kernquantenpunkte (nuclear qubits) sind jedoch ausdrücklich von dem Begriff Quantenpunkt im Sinne des hier vorgelegten Dokuments umfasst. Die ersten Mittel können Quantenpunkte des Quantencomputers, die zumindest eine Teilmenge der Quantenpunkte des Quantencomputers (QC) sind, miteinander koppeln, insbesondere verschränken. Der Quantencomputer (QC) führt ein Quantencomputerprogramm mit einem Quantencomputerprogrammablauf aus. Bevorzugt umfasst der Quantencomputer (QC) einen Steuerrechner (µC) mit einem Speicher (MEM). Typischerweise bildet der Steuerrechner (µC) mit dem Speicher eine von-Neumann- oder Harvard-Architektur. Der Steuerrechner (µC) kann bevorzugt die besagten ersten Mittel des Quantencomputers (QC) steuern. Das Quantencomputerprogramm ist bevorzugt eine Befehlsabfolge von Quantencomputercodes für den Steuerrechner (µC), wobei die Quantencomputerprogrammcodes jeder für sich eine oder mehrere Operationen des Steuerrechners (µC) kodieren bzw. repräsentieren. Dabei repräsentiert mindestens ein Quantencomputerprogrammcode eine Quantenoperation. Typischerweise repräsentieren mehrere verschiedene Quantencomputercodes eine Mehrzahl verschiedener Quantenoperationen. Typischerweise repräsentiert eine Mehrzahl weiterer Quantencomputerprogrammcodes Operationen des Steuerrechners (µC), die keine Quantencomputeroperationen sind. Die Menge der Quantencomputerprogrammcodes im Speicher (MEM) des Steuerrechners (µC) des Quantencomputers bildet das Quantencomputerprogramm des Quantencomputers (QC).

Die ersten Mittel des Quantencomputers (QC) sind bevorzugt dazu geeignet, eine Überlagerung von Quantenzuständen eines oder mehrerer Quantenbits des Quantencomputers (QC) herzustellen und/oder zu manipulieren.

Die ersten Mittel des Quantencomputers (QC) sind bevorzugt dazu geeignet, einen vorbestimmten Quantenzustand eines oder mehrerer Quantenbits des Quantencomputers (QC) einzustellen.

Die ersten Mittel des Quantencomputers (QC) sind bevorzugt dazu geeignet, einen eine vorbestimmte Überlagerung mehrerer vorbestimmter Quantenzustände eines oder mehrerer Quantenbits des Quantencomputers (QC) einzustellen.

Die ersten Mittel des Quantencomputers (QC) sind bevorzugt dazu geeignet, einen eine vorbestimmte Verschränkung mehrerer vorbestimmter Quantenzustände eines oder mehrerer Quantenbits des Quantencomputers (QC) einzustellen.

Der Quantencomputer (QC) verfügt bevorzugt über zweite Mittel, um einen Quantenzustand eines oder mehrerer Quantenbits des Quantencomputers (QC) zu ermitteln und/oder auszulesen. Bevorzugt umfassen die Quantenbits paramagnetische Zentren in Diamant. Bevorzugt umfassen diese paramagnetischen Zentren NV-Zentren und/oder SiV-Zentren und/oder TR1-Zentren und/oder L1-Zentren und/oder TiV-Zentren und/oder GeV-Zentren und/oder SnV-Zentren und/oder NiN₄-Zentren und/oder PbV-Zentren und/oder ST1-Zentren etc. NV-Zentren sind hierbei besonders geeignet.

Bevorzugt umfassen die Quantenbits Kernquantenbits, die Isotope mit einem magnetischen Moment umfassen. Das hier vorgelegte Dokument verweist in diesem Zusammenhang beispielsweise auf das Dokument WO2021083448A1. Beispielsweise kann es sich bei den Kernquantenpunkten um ¹³C-Isotope und/oder ¹⁴N-Isotope und/oder ¹⁵N-Isotope innerhalb des Diamantmaterials handeln.

Die ersten Mittel umfassen bevorzugt eine oder mehrere elektrische Leitungen, die mittle magnetischer, elektrische und/oder elektromagnetische Felder die Quantenzustände der Quantenbits manipulieren können. Die ersten Mittel umfassen bevorzugt auch Mittel zur Ansteuerung dieser Leitungen. Die ersten Mittel können beispielsweise AWG-Generatoren umfassen. Das hier vorgelegte Dokument verweist in diesem Zusammenhang beispielsweise auf das Dokument WO2021083448A1.

Bevorzugt steuert ein Steuerrechner (µC) des Quantencomputers (QC) diese ersten Mittel.

Das hier vorgelegte Dokument verweist in diesem Zusammenhang beispielsweise auf das Dokument WO2021083448A1.

Das Quantencomputerprogramm umfasst im Sinne des hier vorgelegten Dokuments zumindest einen Befehl und/oder eine Befehlssequenz für den Steuerrechner (µC) in Form eines Quantencomputerprogrammcodes, die den Steuerrechner (µC) des Quantencomputers (QC) dazu veranlasst
- mittels der ersten Mittel mindestens ein Quantenbit und/oder mehrere Quantenbits in vorbestimmter Weise zu manipulieren und/oder
- mittels der ersten Mittel einen vorbestimmten Zustand eines oder mehrerer Quantenbits einzustellen und/oder
- mittels der ersten Mittel eine vorbestimmte Überlagerung eines oder mehrerer Quantenzustände eines oder mehrerer Quantenbits des Quantencomputers (QC) einzustellen
- mittels der ersten Mittel eine vorbestimmte Überlagerung eines oder mehrerer Quantenzustände mindestens eines Quantenbits und/oder mehrerer Quantenbits in vorbestimmter Weise zu manipulieren und/oder
- mittels der zweiten Mittel den Quantenzustand eines oder mehrerer Quantenbits auszulesen.

Im Sinne des hier vorgelegten Dokuments stellt ein solcher Befehl oder eine solche Befehlssequenz des Steuerrechners (µC) des Quantencomputers (QC) eine Quantenoperation dar. Bevorzugt repräsentiert ein Quantencomputerprogrammcode eine Quantenoperation bzw. eine Operation des Steuerrechners (µC).

Ein Quantencomputerprogramm im Sinne des hier vorgelegten Dokuments umfasst mindestens eine Quantenoperation. Somit weist ein Quantencomputerprogramm im Sinne des hier vorgelegten Dokuments mindestens einen Befehl auf, der bei Ausführung durch den Steuerrechner (µC) des Quantencomputers (QC) letztlich zu einer Manipulation mindestens eines Quantenbits der Quantenbits des Quantencomputers (QC) mittels der ersten Mittel (M1) und/oder zu einem Auslesen mindestens eines Quantenbits der Quantenbits des Quantencomputers (QC) mittels der zweiten Mittel (M2) führt.

### Interpreter-Betrieb des Quantencomputers

Es ist im Sinne einer einfachen Bedienbarkeit auch denkbar, dass der Steuerrechner (µC) eine Textdatei mit einem Source-Code interpretiert. Die Textdatei stellt das Anwenderprogramm dar und ist in der Regel mit einem einfachen Editor in einer Datenverarbeitungsanlage direkt auf einem Bildschirm editierbar.

In dem Fall ist die Textdatei des Anwenderprogramms bevorzugt in dem Speicher (MEM) des Quantencomputers (µC) abgelegt. Die Symbole der Textdatei des Anwenderprogramms sind bevorzugt in einer geordneten, bevorzugt sequenziellen Reihenfolge in dem Speicher (MEM) des Quantencomputers abgelegt. Sofern der Speicher (MEM) des Quantencomputers (QC) die Textdatei nicht vollständig aufnehmen kann, lädt bevorzugt der Steuerrechner (µC) die benötigten Komponenten der Textdatei des Anwenderprogramms über eine Datenschnittstelle aus einem Massenspeicher, beispielsweise einer Festplatte oder dergleichen, nach. Die Datenschnittstelle kann beispielsweise ein Datenbus (DB) sein. Der Massenspeicher ist bevorzugt an dem Datenbus (DB) angeschlossen. Sofern der Massenspeicher beispielsweise wegen Belegung des Datenbusses durch andere Quantencomputersystemkomponenten belegt ist, wartet der Steuerrechner (µC) mit dem Nachladen, bis der Datenbus wieder frei ist. Dies kann beschleunigt werden, wenn der Quantencomputer (QC) eine DMA-Schnittstelle aufweist, die direkt Daten eines Quantencomputerprogramms mit Quantencomputerprogrammcodes oder Textsymbolen für einen Interpreter nachlädt. In dem Fall muss der Steuerrechner (µC) nicht warten, da die DMA-Schnittstelle beispielsweise auf Anforderung durch den Steuerrechner (µC) die Daten vom Massenspeicher in den Speicher (MEM) des Quantencomputers (QC) nachlädt oder umgekehrt vom Speicher (MEM) des Quantencomputers (QC) zurück in den Massenspeicher abspeichert.

Bevorzugt umfasst die Textdatei des Anwenderprogramms dann Symbolketten. Die Symbole der Symbolketten können beispielsweise Symbole für Buchstaben, Sonderzeichen, Leerstellen und Steuerzeichen, wie neue Zeile etc. umfassen. Die Symbole sind innerhalb

Im Falle eines Interpreters führt der Steuerrechner ein Basisprogramm aus, das in Form von Quantencomputerprogrammcodes im Speicher (MEM) des Quantencomputers (QC) abgelegt ist, die der Steuerrechner (µC) ausführt. Die Symbole sind bevorzugt in Worten aus Symbolketten mehrerer aufeinander folgender Symbole in der Textdatei und dann auch im Speicher (MEM) des Quantencomputers (QC) organisiert, die bei Darstellung auf einem Bildschirm bevorzugt einen durch einen Menschen lesbaren Text ergeben. Einige Symbolketten der Worte repräsentieren bevorzugt einzelne Quantencomputerprogrammcodes und/oder Folgen von Quantencomputerprogrammcodes. Welche Quantencomputerprogrammcodes und/oder Folgen von Quantencomputerprogrammcode durch die betreffende Symbolkette eines Wortes repräsentiert wird, legt bevorzugt das Basisprogramm im Speicher (MEM) des Quantencomputers (QC) fest. Dort ist bevorzugt codiert, welche konkrete Symbolkette welchem Quantencomputerprogrammcode bzw. welcher Quantencomputerprogrammcodesequenz entspricht. Eine Symbolkette kann somit auch ein Unterprogramm des Quantencomputerprogramms repräsentieren.

Findet nun der Steuerrechner (µC) bei einer Analyse der in seinem Speicher (MEM) befindlichen Informationen der Textdatei durch Ausführung des Basisprogramms eine Symbolkette innerhalb der Informationen der Textdatei, die einer der vordefinierten Symbolketten in dem Speicher entspricht, so ordnet der Steuerrechner durch Ausführung des Basisprogramms dieser Symbolkette einen Quantencomputerprogrammcode oder eine Sequenz von Quantencomputerprogrammcodes oder ein Quantencomputerunterprogramm zu und führt dieses aus. Welcher Quantencomputerprogrammcode bzw. welche Sequenz von Quantencomputerprogrammcodes bzw. welches Quantencomputerunterprogramm der Symbolkette zugeordnet ist, ist dabei bevorzugt im Speicher (MEM) des Quantencomputers hinterlegt. Bei der Analyse der Symbolkette greift der Steuerrechner (µC) bevorzugt hierauf zu und identifiziert hierdurch den auszuführenden Quantencomputerprogrammcode oder die auszuführende Sequenz von Quantencomputerprogrammcodes oder das auszuführende Quantencomputerunterprogramm. Genau genommen führt also der Steuerrechner (µC) des Quantencomputers (QC) den Quantencomputerprogrammcode im Speicher (MEM) des Quantencomputers (QC) aus. Dabei kann der Speicher (MEM) die besagten Befehlssequenzen umfassen, die Quantenoperationen darstellen. Führt der Steuerrechner (µC), der Teil des Quantencomputers (QC) im Sinne des hier vorgelegten Dokuments ist, einen solchen Quantencomputerprogrammcode einer Befehlssequenz einer Quantenoperation aus, so führt damit der Quantencomputer als Ganzes diese Quantenoperation durch. Damit ist in diesem Sinne die Durchführung einer Quantenoperation im Sinne des hier vorgelegten Dokuments eine Ausführung eines Befehls eines Quantencomputerprogrammcodes im Speicher (MEM) des Quantencomputers (QC) bzw. einer Befehlssequenz eines Quantencomputerprogrammcodes im Speicher (MEM) des Quantencomputers (QC) durch den Steuerrechner (µC) des Quantencomputers, die einem solchen besagten Befehl oder eine solchen besagten Befehlssequenz des Steuerrechners (µC) des Quantencomputers (QC) entspricht, die zumindest ein Quantenbit des Quantencomputers in irgendeiner Weise verändernd oder auslesend einbezieht.

Eine Quantencomputerberechnung im Sinne des hier vorgelegten Dokuments ist ein Quantencomputerprogramm oder ein Quantencomputerprogrammabschnitt, der zumindest einen Quantencomputerprogrammcode für zumindest eine Quantenoperation oder zumindest eine Sequenz von Quantenoperationen umfasst.

Der Quantencomputerprogrammablauf ist im Sinne des hier vorgelegten Dokuments die vorgesehen zeitliche Folge der Abarbeitung von Quantencomputerprogrammcode durch den Steuerrechner (µC) des Quantencomputers (QC). Der Quantencomputerprogrammcode in Form von Quantencomputercode befindet sich dabei vorzugsweise in einem Speiche (MEM) des Steuerrechners (µC) des Quantencomputers (QC). Bevorzugt besteht dabei ein Quantencomputercode aus einem oder mehreren Datenbits, die zusammen zumindest eine vorbestimmte Manipulation eines oder mehrere vorbestimmter Quantenbits symbolisieren. Ein Quantencomputerprogrammcode kann dabei auch konventionelle Op-Codes des Steuerrechners (µC) repräsentieren. Bei dem Steuerrechner (µC) kann es sich beispielsweise um einen ARM-Prozessor handeln. Dabei kann das Quantencomputerprogramm einen Quantencomputerprogrammablauf mit Schleifen und Verzweigungen aufweisen. Wie oben ausgeführt, kann das Quantencomputerprogramm auch in lesbarer Form vorliegen und während des Betriebs durch den Steuerrechner (µC) interpretiert werden. Im Sinne des hier vorgelegten Dokuments kann daher auch eine Symbolkette, die einen Quantencomputercode repräsentiert und/oder eine Folge von Quantencomputercodes repräsentiert und/oder ein Quantencomputerunterprogrammrepräsentiert, Teil eines Quantencomputerprogramms sein. Wie die Informationen über die auszuführenden Quantencomputercodes dem Steuerrechner (µC) zur Verfügung stehen ist somit letztlich irrelevant. Wichtig ist nur, dass der Steuerrechner zum richtigen Zeitpunkt die notwendigen Informationen darüber zur Verfügung stehen, welcher Quantencomputercode nun als nächste auszuführen ist. Eine solche Anweisungsliste ist im Sinne des hier vorgelegten Dokuments ein Quantencomputerprogramm. Das Quantencomputerprogramm kann somit binär codiert und/oder als interpretierbare Klartextdaten im Speicher (MEM) des Quantencomputers (QC) vorliegen.

In vielen Fällen ist es sinnvoll, wenn eine Verzweigungsoperation im

Quantencomputerprogrammablauf von dem ausgelesenen Zustand eines oder mehrerer Quantenbits des Quantencomputers (QC) zu einem Zeitpunkt und/oder zu einem Verzeigungszeitpunkt während der Ausführung des Quantencomputerprogramms durch den Steuerrechner (µC)abhängt.

In vielen Fällen ist es sinnvoll, wenn die Durchführung einer Quantencomputerprogrammschleife im Quantencomputerprogrammablauf von dem ausgelesenen Zustand eines oder mehrerer Quantenbits des Quantencomputers (QC) zu einem Zeitpunkt und/oder zu einem Rücksprungzeitpunkt und/oder am Beginn der Quantencomputerprogrammschleife und/oder zu Beginn der Quantencomputerprogrammschleife und/oder innerhalb der Quantencomputerprogrammschleife während der Ausführung des Quantencomputerprogramms durch den Steuerrechner (µC) abhängt.

Die Quantencomputerüberwachungsvorrichtung (QUV) überwacht den korrekten Quantencomputerprogrammablauf des Quantencomputerprogramms des Quantencomputers (QC). Die Quantencomputerüberwachungsvorrichtung (QUV) kann beispielsweise neben dem

Quantencomputerprogrammablauf auch den Wert und/oder Werteverlauf eines oder mehrerer der folgenden Betriebsparameter überwachen:
- einen Wert einer Betriebsspannung einer Betriebsspannungsleitung (VDD) des Quantencomputersystems (QUSYS) gegenüber einem Bezugspotenzial (GND),
- einen Wert einer dieser Betriebsspannungsleitung (VDD) zugeordneten Stromaufnahme (IDD) des Quantencomputersystems (QUSYS),
- einen Wert einer Betriebsspannung einer Betriebsspannungsleitung (VDD) des Quantencomputers (QC) gegenüber einem Bezugspotenzial (GND) und/oder
- einen Wert einer dieser Betriebsspannung zugeordneten Stromaufnahme (IDD) des Quantencomputers (QC),
- einen Wert einer Betriebsspannung einer Betriebsspannungsleitung (VDD) des Steuerrechners (µC) des Quantencomputers (QC) gegenüber einem Bezugspotenzial (GND) und/oder
- einen Wert einer dieser Betriebsspannung zugeordneten Stromaufnahme (IDD) des Steuerrechners (µC) des Quantencomputers (QC),
- einen Wert einer Betriebsspannung einer Betriebsspannungsleitung (VDD) der ersten Mittel zur Manipulation der Quantenbits des Quantencomputers (QC) gegenüber einem Bezugspotenzial (GND) und/oder
- einen Wert einer dieser Betriebsspannung zugeordneten Stromaufnahme (IDD) der ersten Mittel zur Manipulation der Quantenbits des Quantencomputers (QC),
- einen Wert einer Betriebsspannung einer Betriebsspannungsleitung (VDD) der zweiten Mittel zum Auslesen des Zustands der Quantenbits des Quantencomputers (QC) gegenüber einem Bezugspotenzial (GND) und/oder
- einen Wert einer dieser Betriebsspannung zugeordneten Stromaufnahme (IDD) der zweiten Mittel zum Auslesen des Zustands der Quantenbits des Quantencomputers (QC),
- einen Wert einer Betriebsspannung eines anderen Vorrichtungsteils des Quantencomputers (QC), beispielsweise von Messeinrichtungen zur Erfassung der magnetischen Flussdichte am Ort der Quantenbits oder in der Nähe der Quantenbits des Quantencomputers (QC), gegenüber einem Bezugspotenzial (GND) und/oder
- einen Wert einer Betriebsspannung zugeordneten Stromaufnahme eines solchen Vorrichtungsteils des Quantencomputers (QC),
- den Prozessortakt (QCCLK) des Steuerrechners (µC) des Quantencomputers (QC),
- den Wert der Frequenz des Prozessortakts (QCCLK) des Steuerrechners (µC),
- die Lichtabgabe einer Lichtquelle (LED) eines Quantencomputers (QC) zum Bestrahlen von Quantenbits (QUB) des Quantencomputers (QC) mit Strahlung,
- die Detektionsfähigkeit von elektromagnetischer Strahlung eines Fotodetektors, der beispielsweise Teil der besagten zweiten Mittel zum Auslesen des Zustands eines oder mehrerer Quantenbits des Quantencomputers (QC) sein kann,
- die bestimmungsgemäß korrekte Erzeugung elektromagnetischer Felder, insbesondere von Mikrowellenfeldern und/oder Radiowellenfeldern einer Vorrichtung des Quantencomputers (QC), insbesondere der besagten ersten Mittel (M1), zur Manipulation eines oder mehrerer Quantenbits (QUB),
- den komplexen und/oder realen und/oder imaginären Leitwert einer Leitung, die Teil einer Vorrichtung des Quantencomputers (QC), insbesondere der besagten ersten Mittel (M1), zur Manipulation eines oder mehrerer Quantenbits (QUB) ist,
- die bestimmungsgemäß korrekte Funktion der zweiten Mittel (M2) zum Auslesen der Quantenzustände der Quantenbits (QUB) des Quantencomputers (QC).

Der Quantencomputer (QC) führt vorschlagsgemäß in vorbestimmten Zeiträumen vor vorbestimmten Zeitpunkten (tv) vorbestimmte Quantencomputerberechnungen mit mindestens einer Quantenoperation unter Manipulation zumindest eines Quantenbits (QUB) des Quantencomputers (QC) durch. Die Quantencomputerberechnungen umfassen dabei ein oder mehrere Quantenoperationen, die der Quantencomputer (QC) bevorzugt entsprechend einem vorgesehenen Quantencomputerprogrammablauf in vorgesehener Weise durchführt. Das Ergebnis dieser vorbestimmten Quantencomputerberechnungen des Quantencomputers (QC) ist die Berechnung vorbestimmter Quantencomputerberechnungsergebnisse durch den Quantencomputer (QC). Vorschlagsgemäß steuert der Quantencomputer (QC) nach diesen vorbestimmten Zeitpunkten (tv) die Quantencomputerüberwachungsvorrichtung (QUV) an. Der Steuerrechner (µC) sendet hierzu bevorzugt über einen Datenbus (DB) oder ein anderes Signalisierungsmittel eine Nachricht an die Quantencomputerüberwachungsvorrichtung (QUV). Der Inhalt und der Zeitpunkt der Sendung der Nachricht durch den Quantencomputer (QC) an die Quantencomputerüberwachungsvorrichtung sind nicht beliebig. Im Gegensatz zu Stand der Technik kann bei einer Überwachung eines Quantencomputers in vielen Fällen das Ergebnis einer Quantencomputerberechnung nicht exakt im Vorfeld festgelegt werden, da ein solches Quantencomputerberechnungsergebnis in den Quantenbits die Form der Überlagerung einer Mehrzahl möglicher Quantenzustände sein kann, die sich in den Quantenbits überlagern. Liest der Steuerrechner nun den Zustand der Quantenbits aus, so erhält er nur ein mögliches Quantencomputerberechnungsergebnis von mehreren Quantencomputerberechnungsergebnissen. Sieht die durchgeführte Quantencomputerberechnung als Ergebnis eine Überlagerung mehrerer solcher Quantencomputerberechnungsergebnisse als erlaubte Quantencomputerberechnungsergebnisse vor, so reicht die einmalige Berechnung der Quantencomputerberechnungsergebnisse in der Regel nicht aus, um auf eine korrekte Funktion des Quantencomputers zu schließen. Vielmehr wird die Quantencomputerberechnungsvorrichtung (QUV) mehrmals die vorbestimmte Quantencomputerberechnung durch den Quantencomputer (QC) durchführen lassen und die jeweilige Häufigkeit der erwarteten Quantencomputerberechnungsergebnisse mit jeweiligen Erwartungswerten für die tatsächlich vom Quantencomputer (QC) an die Quantencomputerüberwachungsvorrichtung (QUV) übermittelten Quantencomputerberechnungsergebnisse vergleichen. Weicht diese jeweilige Häufigkeit der tatsächlich vom Quantencomputer (QC) an die Quantencomputerüberwachungsvorrichtung (QUV) übermittelten Quantencomputerberechnungsergebnisse von den jeweiligen Erwartungswerten für die jeweilige Häufigkeit der erwarteten Quantencomputerberechnungsergebnisse bei einem oder mehreren Erwartungswerten um mehr als eine jeweilige Erwartungswertabweichungstoleranz ab, so kann die Quantencomputerüberwachungsvorrichtung (QUV) auf einen Fehler des Quantencomputers (QC) schließen.

Um die Komplexität klein zu halten, ist es sinnvoll, wenn eine solche Quantencomputerberechnung zur Überprüfung der korrekten Funktion von Quantenbits des Quantencomputers (QC) nur wenige Quantenbits des Quantencomputers (QC), bevorzugt nur ein Quantenbit des Quantencomputers (QC) manipuliert.

Um die Komplexität klein zu halten, ist es sinnvoll, wenn eine solche Quantencomputerberechnung zur Überprüfung der korrekten Funktion von Kopplungen von Quantenbits des Quantencomputers (QC) nur wenige Kopplungen weniger Quantenbits des Quantencomputers (QC), bevorzugt nur eine Kopplung zwischen zwei Quantenbit des Quantencomputers (QC) manipuliert. Beispielsweise kann eine solche Quantencomputerberechnung eine korrekte Verschränkung zwischen zwei Quantenbits des Quantencomputers prüfen.

Der Quantencomputer muss dabei der Quantencomputerüberwachungsvorrichtung innerhalb eines bevorzugt vorgegebenen Zeitfensters das erwartete Quantencomputerberechnungsergebnis mitteilen. Es kann sich auch um das Ergebnis eines Selbsttests des Quantencomputers (QC) handeln.

Das Selbsttestergebnis ist dann typischerweise ein Quantencomputerberechnungsergebnis im Sinne des hier vorgelegten Dokuments.

Sofern der Quantencomputer nicht rechtzeitig, also nicht innerhalb des erwarteten Zeitfensters, das erwartete oder das erlaubte Quantencomputerberechnungsergebnis an die Quantencomputerüberwachungsvorrichtung sendet, schließt die Quantencomputerüberwachungsvorrichtung (QUV) auf einen Fehler oder fehlerhaften Zustand des Quantencomputers (QC). Die Quantencomputerüberwachungsvorrichtung (QUV) führt dann bevorzugt eine Gegenmaßnahme oder mehrere Gegenmaßnahmen durch. Hierbei kann es sich beispielsweise um die Durchführung vorbestimmter Quantencomputerberechnungen zum Test des Quantencomputers (QC) und/oder um eine Stilllegung des betreffenden Quantencomputers (QC) und/oder durch den Ersatz des Quantencomputers (QC) durch eine Quantencomputersimulationsvorrichtung zur Gewährleistung eines Notlaufs und/oder um eine Signalisierung eine Fehlers an eine übergeordnete Einheit und/oder einen Nutzer und/oder eine Versetzung des Quantencomputersystems in einen Notlaufzustand oder dergleichen handeln. Diese Maßnahmen vermeiden, dass das Quantencomputersystem oder ein vom Quantencomputersystem beeinflusstes oder gesteuertes System in einen nicht definierten oder gefährlichen Zustand geraten kann.

Insbesondere kann die Quantencomputerüberwachungsvorrichtung die Quantencomputerüberwachungsergebnisse auf Plausibilität überprüfen. Beispielsweise können vorbestimmbare spezielle Quantencomputerberechnungsergebnisse von vornherein ausgeschlossen sein. Beispielsweise ist es denkbar, dass das Quantencomputersystem Teil eines übergeordneten Gesamtsystems ist und dieses beeinflusst oder steuert. In der Menge der möglichen Quantencomputerberechnungsergebnisse, die bei einer wie auch immer gearteten Fehlfunktion des Quantencomputers (QC) an das übergeordnete Gesamtsystem weitergegeben werden könnten, können sich beispielsweise auch solche Quantencomputerberechnungsergebnisse befinden, die vorhersehbar, das übergeordnete Gesamtsystem funktionsunfähig machen würde oder beschädigen würden oder in einen unsicheren oder gefährlichen Zustand bringen würden. Bevorzugt unterbindet die Quantencomputerüberwachungsvorrichtung (QUV) die Weitergabe dieser fehlerhaften Quantencomputerberechnungsergebnisse an das übergeordnete Gesamtsystem. Bevorzugt ersetzt die Quantencomputerüberwachungsvorrichtung (QUV) in einem solchen Fall, beispielsweise im Zusammenwirken mit einer zentralen Steuereinrichtung (ZSE) des übergeordneten Gesamtsystems, das Quantencomputerberechnungsergebnis durch einen vorgegebenen Ersatzwert zusammen mit einer Signalisierung der Fehlerhaftigkeit des ursprünglichen Quantencomputerberechnungsergebnisses. Hierdurch wird das übergeordnete Gesamtsystem in die Lage versetzt, dies zu erkennen und seinerseits Gegenmaßnahmen zu ergreifen.

Beispielsweise kann eine Gegenmaßnahme der Quantencomputerüberwachungsvorrichtung (QUV) ein Rücksetzten (Reset-Funktion) des Quantencomputers (QC) auf den

Quantencomputerprogrammstart (QPS) oder einen anderen vorbestimmten Quantencomputerprogrammpunkt (QPV) dergleichen durchführen.

Das Quantencomputersystem und/oder der Quantencomputer (QC) umfassen bevorzugt einen Datenbus (DB). Der Steuerrechner (µC) und/oder eine DMA-Schnittstelle des Quantencomputers (QC) sind bevorzugt mit dem Datenbus (DB) verbunden. An dem Datenbus (DB) kann beispielsweise ein externer Massenspeicher, wie beispielsweise eine Festplatte angeschlossen sein. Bevorzugt koppelt der Datenbus (DB) den Quantencomputer (QC) und zwar insbesondere den Steuerrechner (µC) des Quantencomputers mit der Quantencomputerüberwachungsvorrichtung (QUV). Die Quantencomputerüberwachungsvorrichtung (QUV) kann Teil des Quantencomputers (QC) sein. Die Quantencomputerüberwachungsvorrichtung (QUV) ist aber bevorzugt immer Teil des Quantencomputersystems (QUSYS). Der Steuerrechner (µC) des Quantencomputers (QC) und damit der Quantencomputer (QC) kann Programmdaten und/oder Quantenprogrammcodes und/oder Informationen und/oder Quantencomputerberechnungsergebnisse mittels des Datenbusses (DB) an die Quantencomputerüberwachungsvorrichtung (QUV) übertragen. Die Quantencomputerüberwachungsvorrichtung (QUV) Informationen und/oder Anfragen und/oder Quantencomputerprogrammcode und/oder Programmdaten mittels des Datenbusses (DB) an den Quantencomputer(QC) bzw. an den Steuerrechner (µC) des Quantencomputers (QC) übertragen.

Die Laufzeit von Quantencomputerprogrammen, die der Steuerrechner (µC) des Quantencomputers (QC) und damit der Quantencomputer (QC) ausführt, muss so kurz sein, dass die Kohärenz der Quantenbits des Quantencomputers (QC) in dieser Zeit nicht verloren geht. Die Abarbeitung von Quantencomputerprogrammen durch den Steuerrechner (µC) endet daher typischerweise bevor dies geschieht. Einen solchen Zeitabschnitt nennen wir hier im Folgenden einen Quantencom puterprogrammabschnitt.

Nachdem ein Quantencomputerprogrammabschnitt ausgeführt wurde, muss der Steuerrechner (µC) des Quantencomputers (QC) zu Beginn des nächsten Quantencomputerprogrammabschnitts mittels der ersten Mittel die Quantenbits des Quantencomputers (QC) neu initialisieren und in einer vorgegeben Überlagerung von Quantenzuständen bringen. Hierzu liest der Steuerrechner (µC) mittels der zweiten Mittel einen Zustand der relevanten Quantenbits des Quantencomputers (QC) am Ende des vorausgehenden Quantencomputerprogrammabschnitts aus. Da dieses Auslesen immer nur einen Zustand der sich am Ende des vorausgehenden Quantencomputerprogrammabschnitts überlagernden Quantenzustände der Quantenbits liefert, führt der Steuerrechner einen vorausgehenden Quantencomputerprogrammabschnitt bevorzugt mehrfach aus, um eine Statistik über die Zustände führen zu können und die Art der Überlagerung am Ende des vorausgehenden Quantencomputerprogrammabschnitts feststellen zu können. Diese Überlagerung der Quantenzustände initialisiert der Steuerrechner (µC) dann mittels der ersten Mittel bevorzugt am Beginn eines dem vorausgehenden Quantencomputerprogrammabschnitt nachfolgenden Quantencomputerprogrammabschnitts, sodass dann noch genügend Zeit für nachfolgende Quantencomputerberechnungen zur Verfügung steht. Diese periodenhafte Abarbeitung eines Quantencomputerprogramms durch den Quantencomputer schafft die Möglichkeit, zwischen einem vorausgehenden Quantencomputerprogrammabschnitt und einem nachfolgenden Quantencomputerprogrammabschnitt einen Quantencomputertestprogrammabschnitt einzufügen, in dem der Quantencomputer (QC) eine Quantencomputerberechnung durchführt, die die Quantencomputerüberwachungsvorrichtung (QUV) dem Quantencomputer als Aufgabe und/oder Auftrag und/oder Anfrage signalisiert hat.

Bevorzugt ist dabei das Ergebnis dieser Quantencomputerberechnung innerhalb des Quantencomputertestprogrammabschnitts vorbestimmt. Im Gegensatz zum Stand der Technik sind hierbei jedoch, da es sich um einen Quantencomputer handelt, die Ergebnisse nicht deterministisch. Vielmehr können ggf. mehrere, sich in den Quantenbits des Quantencomputers (QC) Quantenzustände Ergebnis einer solchen Quantencomputerberechnung zu testzwecken sein. Deterministisch ist dabei lediglich die Verteilung der Häufigkeit der Auslesung der verschiedenen Ergebnisse, wenn der Quantencomputertestprogrammabschnitt mehrfach durch den Quantencomputer (QC) ausgeführt wird. Soll daher in mehreren Quantencomputertestprogrammabschnitten die gleiche Quantenberechnung mehrfach ausgeführt werden, so übermittelt bevorzugt der Steuerrechner (µC) des Quantencomputers (QC) die jeweiligen Quantencomputerberechnungsergebnisse an die Quantencomputerüberwachungsvorrichtung (QUV). Die Quantencomputerüberwachungsvorrichtung überprüft somit nicht das Ergebnis der einzelnen Quantencomputerberechnung, sondern die Statistische Verteilung der Ergebnisse der Quantencomputerberechnung. Bevorzugt prüft die Quantencomputerüberwachungsvorrichtung dabei nicht alle Quantenbits, sondern immer nur eine Teilmenge der Quantenbits des Quantencomputers (QC) und/oder eine Teilmenge der Kopplungen zwischen mehreren, mindestens aber zwei Quantenbits des Quantencomputers (QC) aus der Menge aller Kopplungen zwischen Quantenbits des Quantencomputers (QC), um die Menge des physikalisch benötigten Speicherplatzes in einem Speicher der Quantencomputerüberwachungsvorrichtung zu begrenzen.

Ist eine erste Teilmenge der Quantenbits des Quantencomputers (QC) auf diese Weise geprüft, so prüft bevorzugt die Quantenüberwachungsvorrichtung (QUV) eine zweite Teilmenge der Quantenbits des Quantencomputers (QC) auf diese Weise. Bevorzugt, aber nicht notwendigerweise haben die erste Teilmenge von Quantenbits des Quantencomputers (QC) und die zweite Teilmenge von Quantenbits des Quantencomputers (QC) eine nicht leere Schnittmenge.

Ist eine erste Teilmenge der Kopplungen zwischen mehreren, mindestens aber zwei Quantenbits des Quantencomputers (QC) aus der Menge aller Kopplungen zwischen Quantenbits des Quantencomputers (QC) auf diese Weise geprüft, so prüft bevorzugt die Quantenüberwachungsvorrichtung (QUV) eine zweite Teilmenge der Kopplungen zwischen mehreren, mindestens aber zwei Quantenbits des Quantencomputers (QC) aus der Menge aller Kopplungen zwischen Quantenbits des Quantencomputers (QC) auf diese Weise. Bevorzugt, aber nicht notwendigerweise haben die erste Teilmenge von Kopplungen zwischen mehreren, mindestens aber zwei Quantenbits des Quantencomputers (QC) aus der Menge aller Kopplungen zwischen Quantenbits des Quantencomputers (QC) und die zweite Teilmenge von Kopplungen zwischen mehreren, mindestens aber zwei Quantenbits des Quantencomputers (QC) aus der Menge aller Kopplungen zwischen Quantenbits des Quantencomputers (QC) eine nicht leere Schnittmenge.

Die Ausführung der Quantencomputertestprogrammabschnitte und der

Quantencomputerprogrammabschnitte darf nicht beliebig viel Zeit in Anspruch nehmen. Dauer dies zu lange, so liegt ein Fehler vor, den die Quantencomputerüberwachungsvorrichtung (QUV) erkennen kann. Nachdem der die Quantencomputerüberwachungsvorrichtung dem Quantencomputer (QC) eine Aufgabe einer durzuführenden Quantencomputerberechnung gestellt hat, erwartet die Quantencomputerüberwachungsvorrichtung daher, dass der Quantencomputer (QC) nach den vorbestimmten Zeitpunkten (tv) die Quantencomputerüberwachungsvorrichtung (QUV) ansteuern muss, um in der Quantencomputerüberwachungsvorrichtung einen Zeitgeber auf einen Startwert zurückzusetzen. Bevorzugt läuft dieser Zeitgeber in der Quantencomputerüberwachungsvorrichtung mit dem Absenden der Aufgabe an den Quantencomputer (QC) los. Erreicht der Zeitgeber der Quantencomputerüberwachungsvorrichtung einen vorgegebenen kritischen zeitgeberwert, so hat die Bearbeitung der Aufgabe durch den Quantencomputer (QC) zu lange gedauert. In dem Fall leitet die Quantencomputerüberwachungsvorrichtung (QUV) Gegenmaßnahmen ein. Bevorzugt übermittelt der Quantencomputer (QC) bei seiner Ansteuerung der Quantencomputerüberwachungsvorrichtung (QUV) zumindest ein Quantencomputerberechnungsergebnis einer vorbestimmten Quantencomputerberechnung an die Quantencomputerüberwachungsvorrichtung (QUV) bevorzugt über den Datenbus (DB) übermittelt. Die Quantencomputerüberwachungsvorrichtung (QUV) überprüft dann das Quantencomputerberechnungsergebnis des Quantencomputers (QC). Sofern das Quantencomputerberechnungsergebnis nur einen Test von nicht quantentechnologischer Funktionen des Steuerrechners (µC) und anderer deterministischer Komponenten des Quantencomputers (QC)betrifft, kann die Quantencomputerüberwachungsvorrichtung eine direkte Bewertung des Quantencomputerberechnungsergebnisses vornehmen. Sofern jedoch Quantenoperationen mit involviert sind, wird die Quantencomputerüberwachungsvorrichtung (QUV) eine Bewertung und Überprüfung erst nach mehrmaligen erhalten mehrerer Quantencomputerberechnungsergebnisse zu gleichen Quantencomputerberechnungen des Quantencomputers (QC) durch statistische Auswertung derselben durchführen. Die Quantencomputerüberwachungsvorrichtung überprüft somit, ob die statistische Häufigkeit von mehreren Quantencomputerberechnungsergebnissen zu einer gleichen, mehrfach ausgeführten Quantencomputerberechnung einer vorgegebenen Häufigkeitsverteilung entsprich. Weicht die relative Häufigkeit eines Quantencomputerberechnungsergebnisses dieser Quantencomputerberechnung um mehr als ein vorgegebenes Maß von einer erwarteten Häufigkeit dieses Quantencomputerberechnungsergebnisses dieser Quantencomputerberechnung bezogen auf die Gesamtzahl der zugrunde gelegten Quantencomputerberechnungsergebnisse, so schließt die Quantencomputerüberwachungsvorrichtung auf einen Fehler des Quantencomputers. Zu einem solchen Fehler kann es beispielsweise bei einer Zerstörung eines NV-Zentrum durch Diffusion in einem NV-Zentrum basierenden Quantencomputer kommen. Andere Fehlermechanismen sind denkbar. Die Fehlermechanismen hängen auch von der Natur des Quantencomputers ab.

Die Quantencomputerüberwachungsvorrichtung (QUV) schließt somit auf einen Fehlerzustand des Quantencomputers (QC), wenn das Quantencomputerberechnungsergebnis des Quantencomputers (QC) nicht innerhalb einer vorbestimmten erlaubten Lösungsmenge für das das Quantencomputerberechnungsergebnis des Quantencomputers (QC) liegt.

Die Quantencomputerüberwachungsvorrichtung (QUV) erstellt somit bevorzugt eine Statistik mehrerer Quantencomputerberechnungsergebnisse gleichartiger Quantencomputerberechnungen des Quantencomputers (QC) erstellt und schließt auf einen Fehler, wenn die Quantencomputerberechnungsergebnisse des Quantencomputers (QC) häufiger als ein vorgegebener Maximalwert von einem erwarteten Quantencomputerberechnungsergebnis des Quantencomputers (QC) abweichen.

Die Quantencomputerüberwachungsvorrichtung (QUV) weist somit bevorzugt einen Speicher auf. In dem Speicher der Quantencomputerüberwachungsvorrichtung (QUV) ist bevorzugt ein Wert abgelegt sein und/oder werden, der mit dem Maximalwert korrespondiert, um den die Quantencomputerberechnungsergebnisse des Quantencomputers (QC) maximal häufig von einem erwarteten Quantencomputerberechnungsergebnis des Quantencomputers (QC) abweichen dürfen. Die Quantencomputerüberwachungsvorrichtung (QUV) signalisiert im Falle des Schließens auf einen Fehler durch die Quantencomputerüberwachungsvorrichtung (QUV) dem Quantencomputer (QC) oder einem übergeordneten System (ZSE) das Auftreten dieses Fehlers. Die Quantencomputerüberwachungsvorrichtung (QUV) kann auch oder stattdessen eine Information über diesen Fehler beispielsweise für eine Abfrage einer zentralen Steuereinheit (ZSE) über den Datenbus (DB) bereithalten.

Das Quantencomputersystem (QUSYS) umfasst bevorzugt ein übergeordnetes System, beispielsweise in Form einer zentralen Steuereinheit (ZSE). Die zentrale Steuereinheit (ZSE) steuert bevorzugt eine Mehrzahl von Quantencomputers (QC1 bis QC16) über einen oder mehrere Datenbusse (DB). Typischerweise handelt es sich um einen einzigen gemeinsamen Datenbus (DB). Bevorzugt weist das vorgeschlagene Quantencomputersystem (QUSYS) zwei zueinander redundante und bevorzugt gemeinsame Datenbusses (DB1, DB2) auf. Im Ausfall eines Datenbusses dieser mindestens zwei gemeinsamen Datenbusse (DB1, DB2) kann die zentrale Steuereinheit dann noch die Quantencomputer weiter steuern.

Das Quantencomputersystem (QUSYS) umfasst bevorzugt mehrere Quantencomputer (QC1, QC2, ..QC16), die bevorzugt gleiche Quantencomputerberechnungen zeitlich parallel ausführen und so der zentralen Steuereinheit (ZSE) eine Fehlerkorrektur der statistisch erlaubten Fehler ermöglichen. Bevorzugt hält das übergeordnete System (ZSE) für mindestens einen Quantencomputer (QC), bevorzugt für alle Quantencomputer (QC1, QC2, .... QC16) jeweils einen Speicher mit einem jeweiligen Fehlerzählerwert, der dem jeweiligen Quantencomputer der Quantencomputer zugeordnet ist, vor.

Das übergeordnete System (ZSE) erhöht den Fehlerzählerwert, der einem Quantencomputer (QC) zugeordnet ist, um eine erste Fehlerzählerschrittweite erhöht, wenn die Quantencomputerüberwachungsvorrichtung (QUV) einen vermutlichen Fehler des den Fehlerzählerwert zugeordneten Quantencomputers (QC) signalisiert.

Das übergeordnete System (ZSE) erniedrigt bevorzugt den Fehlerzählerwert, der einem Quantencomputer (QC) zugeordnet ist, um eine zweite Fehlerzählerschrittweite, wenn die Quantencomputerüberwachungsvorrichtung (QUV) eine angenommene Korrektheit eines Quantencomputerberechnungsergebnisses des den Fehlerzählerwert zugeordneten Quantencomputers (QC) signalisiert.

Das übergeordnete System (ZSE) verwendet in dem Fall, wenn für eine durch das Quantencomputersystem auszuführende Quantenberechnungsaufgabe nicht alle Quantencomputer des Quantencomputersystems benötigt werden, die Quantencomputer des Quantencomputersystems mit den jeweils niedrigsten aktuellen Fehlerzählerwerten, die den jeweiligen Quantencomputer zugeordnet sind, für die Ausführung der beabsichtigten Berechnungsaufgabe.

Die Überwachungsaufgaben können statt durch das übergeordnete System (ZSE) auch durch die Quantencomputerüberwachungsvorrichtung (QUV) vorgenommen werden.

Bevorzugt hält dann die Quantencomputerüberwachungsvorrichtung (QUV) für mindestens einen Quantencomputer (QC), bevorzugt für alle Quantencomputer (QC1, QC2, .... QC16) jeweils einen Speicher mit einem jeweiligen Fehlerzählerwert, der dem jeweiligen Quantencomputer der Quantencomputer zugeordnet ist, vor.

Die Quantencomputerüberwachungsvorrichtung (QUV) erhöht dann den Fehlerzählerwert, der einem Quantencomputer (QC) zugeordnet ist, um eine erste Fehlerzählerschrittweite erhöht, wenn die Quantencomputerüberwachungsvorrichtung (QUV) einen vermutlichen Fehler des den Fehlerzählerwert zugeordneten Quantencomputers (QC) signalisiert.

Die Quantencomputerüberwachungsvorrichtung (QUV) erniedrigt dann bevorzugt den Fehlerzählerwert, der einem Quantencomputer (QC) zugeordnet ist, um eine zweite Fehlerzählerschrittweite, wenn die Quantencomputerüberwachungsvorrichtung (QUV) eine angenommene Korrektheit eines Quantencomputerberechnungsergebnisses des den Fehlerzählerwert zugeordneten Quantencomputers (QC) signalisiert.

Das übergeordnete System (ZSE) liest dann die Fehlerzählwerte in der Quantencomputerüberwachungsvorrichtung (QUV) und verwendet in dem Fall, wenn für eine durch das Quantencomputersystem auszuführende Quantenberechnungsaufgabe nicht alle Quantencomputer des Quantencomputersystems benötigt werden, die Quantencomputer des Quantencomputersystems mit den jeweils niedrigsten aktuellen Fehlerzählerwerten, die den jeweiligen Quantencomputer zugeordnet sind, für die Ausführung der beabsichtigten Berechnungsaufgabe.

Bevorzugt hat die Signalisierung der Quantencomputerüberwachungsvorrichtung (QUV) die Folge, dass diese Signalisierung
- den Quantencomputer (QC) zurücksetzt und/oder
- den Quantencomputer (QC) in einen vorbestimmten Zustand bringt und/oder
- zumindest ein Quantenbit (QUB) des Quantencomputers (QC) in einen vorbestimmten Zustand bringt und/oder
- zumindest ein Kernquantenbit (QUB) des Quantencomputers (QC) in einen vorbestimmten Zustand bringt und/oder.
- zumindest ein Quantenregister (QUREG) des Quantencomputers (QC) in einen vorbestimmten Zustand bringt und/oder
- zumindest ein Kernquantenregister (CQUREG) des Quantencomputers (QC) in einen vorbestimmten Zustand bringt und/oder
- zumindest ein Kern-Elektron-Quantenregister (CEQUREG) des Quantencomputers (QC) in einen vorbestimmten Zustand bringt.

Bevorzugt bringt der Quantencomputer (CQ) im Falle eines Zurücksetzens des Quantencomputers, beispielsweise durch die Quantencomputerüberwachungsvorrichtung (QUV) seine Quantenbits (QUB) und/oder einen Teil seiner Quantenbits (QUB) in eine vorbestimmte Kombination überlagerter Quantenzustände. Bevorzugt bringt der Quantencomputer (CQ) im Falle eines Zurücksetzens auch seine Kernquantenbits (CQUB) und/oder einen Teil seiner Kernquantenbits (CQUB) in eine vorbestimmte Kombination überlagerter Quantenzustände.

Der Quantencomputer (QC) kann beispielsweise beim Auftreten einer von Quantencomputer (QC) selbst oder von dem Steuerrechner (µC) des Quantencomputers (QC) selbst erkannten Fehlfunktion zur Auslösung einer von der Quantencomputerüberwachungsvorrichtung (QUV) auslösbaren Rücksetz-Funktion des Quantencomputers (QC) eine gezielte Fehlansteuerung der Quantencomputerüberwachungsvorrichtung (QUV), insbesondere durch Übermittlung eines falschen Quantencomputerberechnungsergebnisses, vornehmen. Dies erspart eine separate Signalleitung und ermöglicht es der Quantencomputerüberwachungsvorrichtung (QUV) und/oder der zentralen Steuereinrichtung (ZSE) diesen Zustand des Quantencomputers (QC) zu erkennen.

Bevorzugt kann der Quantencomputer (QC) die Fehlansteuerung beispielsweise dadurch durchführen, dass der Quantencomputer (QC) die Quantencomputerüberwachungsvorrichtung (QUV), insbesondere durch Übermittlung eines falschen und/oder richtigen Quantencomputerberechnungsergebnisses, innerhalb einer vorgegebenen und/oder vorgebbaren Zeitspann häufiger als eine vorgegebene und/oder vorgebbare Maximalanzahl für diese Zeitspanne ansteuert.

Die Quantencomputerüberwachungsvorrichtung (QUV) schließt bevorzugt auf einen Fehler, wenn der Quantencomputer (QC) ein Quantencomputerberechnungsergebnis **vor** einem vorbestimmten zweiten Zeitpunkt (t2) an die Quantencomputerüberwachungsvorrichtung (QUV) übermittelt, wobei dieser vorbestimmte zweite Zeitpunkt (t2) nach dem vorbestimmten Zeitpunkt (tv) liegt oder gleich dem vorbestimmten Zeitpunkt (tv) ist, und/oder wenn der Quantencomputer (QC) ein Quantencomputerberechnungsergebnis **nach** einem vorbestimmten dritten Zeitpunkt (t3) an die Quantencomputerüberwachungsvorrichtung (QUV) übermittelt, wobei dieser vorbestimmte dritte Zeitpunkt (t3) nach dem vorbestimmten Zeitpunkt (tv) liegt oder gleich dem vorbestimmten Zeitpunkt (tv) ist. Dabei kann das Quantencomputerberechnungsergebnis durchaus korrekt sein. Der falsche Zeitpunkt der Lieferung lässt dann aber auf einen Fehler des Quantencomputers (QC) schließen.

Bevorzugt signalisiert die Quantencomputerüberwachungsvorrichtung (QUV) dem Quantencomputer (QC) vor Beginn eines vorbestimmten Zeitraums (Tv), welche vorbestimmte Quantencomputerberechnung bzw. welche vorbestimmten Quantencomputerberechnungen der Quantencomputer (QC) durchführen soll. Dies ermöglicht es der Quantencomputerüberwachungsvorrichtung (QUV) die Statistik der Quantencomputerberechnungsergebnisse zu initialisieren und korrekt zu ermitteln. Die Quantencomputerüberwachungsvorrichtung führt also eine Vermessung der Statistik der Quantencomputerberechnungsergebnisse des Quantencomputers (QC) für eine bestimmte Quantencomputerberechnungsaufgabe mit einer bestimmten Quantencomputerberechnung durch. Dies ermöglicht der Quantencomputerüberwachungsvorrichtung ein Schließen auf Fehler in den quantentechnologischen Komponenten und deren Ansteuerungsmitteln, den ersten und zweiten Mitteln, des Quantencomputers (QC). Dies ist im Stand der Technik nicht möglich. Dabei schließt die Quantencomputerüberwachungsvorrichtung auf einen Fehler des Quantencomputers, wenn diese Statistik der Quantencomputerberechnungsergebnisse des Quantencomputers (QC) um mehr als ein jeweils vorgegebenes Maß von der erwarteten Statistik der Quantencomputerberechnungsergebnisse des Quantencomputers (QC) abweicht.

Die Quantencomputerüberwachungsvorrichtung (QUV) signalisiert typischerweise dem Quantencomputer (QC) den Beginn und ggf. das Ende oder die Dauer des vorbestimmten Zeitraums (Tv).

Der Quantencomputer (QC) nimmt typischerweise eine Überwachung auf eine Fehlfunktion bei sich selbst und/oder bei anderen Bauelementen und/oder Quantencomputersystem-Bestandteilen vor. Dies kann beispielsweise so aussehen, dass der Steuerrechner (µC) des Quantencomputers (QC) oder eine spezielle Selbsttestvorrichtung innerhalb des Quantencomputers (QC) den Steuerrechner und/oder die ersten und zweiten Mittel zwischen zwei Quantencomputerberechnungen testen. Bei dieser Selbsttesteinrichtung des Quantencomputers kann es sich um eine Quantencomputerüberwachungsvorrichtung handeln, die dann aber genau einem Quantencomputer zugeordnet ist und daher von dem hier vorgelegten Dokument auch als Teil des Quantencomputers betrachtet wird.

Die Quantencomputerüberwachungsvorrichtung (QUV) nimmt typischerweise eine Überwachung auf eine Fehlfunktion bei sich selbst und/oder bei anderen Bauelementen und/oder Quantencomputersystem-Bestandteilen vor. Bei der Überwachung der anderen Bauelemente kann sich beispielsweise die Quantencomputerüberwachungsvorrichtung wie ein konventioneller Watch-Dog-Schaltkreis verhalten.

Die Quantencomputerüberwachungsvorrichtung kann darüber hinaus auch selbst ein Quantencomputer (QC) sein, der mindestens zwei Quantenbits umfasst. Das bedeutet, dass mehrere Quantencomputer (QC1 bis QC16) sich untereinander überwachen können.

Einen beispielhafte Vorrichtung zur Überwachung eines Quantencomputers (QC), insbesondere zur Verwendung in einem Quantencomputersystem, wie es oben beschrieben ist, umfasst bevorzugt einen Quantencomputer (QC), eine Quantencomputerüberwachungsvorrichtung (QUV) und einen internen Taktgeber (ICLK), der insbesondere den Steuerrechner (µC9 des Quantencomputers und bevorzugt auch alle anderen Schaltkreise mit konventioneller Logik mit einem Basistakt für den Betrieb versorgt. Der Quantencomputer (QC) ist typischerweise mit einer Quantencomputerüberwachungsvorrichtung (QUV), insbesondere über einen Datenbus (DB) oder spezielle Signalleitungen, zur Überwachung des Quantencomputers (QC) verbindbar ist und/oder verbunden. Die Quantencomputerüberwachungsvorrichtung (QUV) ist mit einem internen Taktgeber (ICLK) zur Überwachung eines Systemtakts des Quantencomputers (QC) verbindbar und/oder verbunden. Eine Taktleitung innerhalb des Quantencomputers verbindet beispielsweise den Steuerrechner (µC) mit dem internen Taktgenerator (ICLK) und mit anderen Vorrichtungsteilen des Quantencomputers die eines Takts bedürfen, um zu arbeiten. Die Quantencomputerüberwachungsvorrichtung (QUV) umfasst Mittel zur Überprüfung des Quantencomputerprogrammablaufs des Quantencomputerprogramms des Quantencomputers (QC). Hierbei kann es sich beispielsweise um einen Speicher handeln, in dem Programme und Daten für einen Prozessor innerhalb der Quantencomputerüberwachungsvorrichtung (QUV) hinterlegt sind. Diese Programme betreffen dann typischerweise Testverfahren um die hier beschriebenen Testfunktionen auszuführen. Die Mittel können aber auch wieder Quantenbits und zugehörige Mittel zu Ansteuerung und Auslesung der Zustände dieser Quantenbits sein, um zum Beispiel die erwarteten Ergebnisse von Quantencomputerberechnungen in einem überwachten Quantencomputer (QC) in der Quantencomputerüberwachungsvorrichtung (QUV) selbst auch zu berechnen und für Vergleiche mit dem Quantencomputerberechnungsergebnis des Quantencomputers (QC) bereitzustellen. In dem Fall ist die Quantencomputerüberwachungsvorrichtung (QUV) selbst wieder ein Quantencomputer.

Die Quantencomputerüberwachungsvorrichtung (QUV) umfasst somit bevorzugt auch Mittel zur Überprüfung der korrekten Funktion des Quantencomputers (QC). Des Weiteren umfasst die Quantencomputerüberwachungsvorrichtung (QUV) Mittel zur Überprüfung der korrekten Durchführung von Manipulationen von Quantenbits (QUB) des Quantencomputers (QC). Dies kann beispielsweise der besagte Prozessor innerhalb des Quantencomputerüberwachungsvorrichtung sein.

Die Quantencomputerüberwachungsvorrichtung weist darüber hinaus bevorzugt Mittel zur Überwachung von Betriebsparametern des Quantencomputers (QC), wie beispielsweise des Magnetfelds am Ort der Quantenbits des Quantencomputers (QC) und/oder der Einstrahlung elektromagnetischer Wellen in den Bereich der Quantenbits (QUB) und/oder der Temperatur des Materials der Quantenbits (QUB) und/oder der Bestrahlung, insbesondere mit ionisierender und/oder elektromagnetischer Strahlung, auf. Darüber hinaus weist bevorzugt die Quantencomputerüberwachungsvorrichtung (QUV) Mittel zur Überwachung von Tests von Systemkomponenten des Quantencomputers auf. Die Quantencomputerüberwachungsvorrichtung (QUV) übertragt bei wenigstens einem erkannten Fehler eine Fehlermeldung an den Quantencomputer (QC) und inkrementiert oder dekrementiert oder ändert einen Fehlerzähler in vorbestimmter Weise. Dabei sollte die Zählrichtung innerhalb eines Quantencomputerüberwachungsvorrichtung (QUV) typischerweise gleich sein, Es sollte also bevorzugt nur dekrementiert oder nur inkrementiert werden.

Die Quantencomputerüberwachungsvorrichtung (QUV) umfasst bevorzugt einen eigenen Steuerrechner (µCQUV) der Quantencomputerüberwachungsvorrichtung (QUV)

Die Quantencomputerüberwachungsvorrichtung (QUV) übermittelt typischerweise bei der Überprüfung des Quantencomputerprogramms dem Quantencomputer (QC) Testfragen und zwar in der Regel über den Datenbus.

Die Quantencomputerüberwachungsvorrichtung (QUV) überwacht die Antworten des Quantencomputers (QC), die sie über den Datenbus von dem Quantencomputer (QC) erhält, auf Richtigkeit und/oder Zeitpunkt und/oder statistische Richtigkeit. Dies ermöglicht das Erkennen von Fehlern wie beispielsweise des Ausfalls eines Quantenbits. M Sinne des hier vorgelegten Dokuments erfordert die Berechnung der Antworten auf die Testfragen in Form einer Quantencomputerberechnung typischerweise mindestens eine Manipulation eines Zustands eines Quantenbits und/oder zumindest eine Quantenoperation des Quantencomputers (QC). Damit unterscheidet sich dies vom Stand der Technik, der keine Quantenoperation und die damit verbundene statistische Problematik kennt.

Bei Überwachung der Tests der Systemkomponenten (SYSC) übermittelt bevorzugt die Quantencomputerüberwachungsvorrichtung (QUV) dem Quantencomputer (QC) Testaufträge bevorzugt über den Datenbus. Der Quantencomputer (QC) sendet dann typischerweise der Quantencomputerüberwachungsvorrichtung (QUV) ein Quantencomputerberechnungsergebnis entsprechend der Testfrage zurücksendet, das die Quantencomputerüberwachungsvorrichtung (QUV) auf Richtigkeit und Zeitpunkt und/oder statistische Richtigkeit überwacht.

Die Quantencomputerüberwachungsvorrichtung (QUV) kann beispielsweise bei dem wenigstens einen erkannten Fehler ein an den Quantencomputer (QC) angeschlossenes Gerät (GR)
a) in seiner Funktion für eine vorgegebene Zeitdauer sperren oder
b) in einen sicheren Zustand bringen oder
c) den Zugriff des Quantencomputers auf das Gerät (GR) verhindern oder
d) das Gerät (GR) statt mit dem Quantencomputer mit einer

Quantencomputersimulationsvorrichtung verbinden.

Dies verhindert, dass der Quantencomputer (QC) angeschlossene Systeme oder Systeme deren Teil er ist in einen unsicheren Zustand bringen kann. Bevorzugt ist dabei die Quantencomputerüberwachungsvorrichtung (QUV) bevorzugt direkt mit dem betreffenden Gerät (GR) verbindbar.

Die Quantencomputerüberwachungsvorrichtung (QUV) verlängert bevorzugt die Sperrung des Geräts (GR) bzw. die Einnahme des sicheren Zustands durch das Gerät (GR), sofern die Quantencomputerüberwachungsvorrichtung (QUV) während der Sperrung bzw. während der Einnahme des sicheren Zustands durch das Gerät (GR) wenigstens einen weiteren Fehler des Quantencomputers (QC) erkennt.

Wenn der bevorzugt vorhandene Fehlerzähler der Quantencomputerüberwachungsvorrichtung (QUV) einen vorgegebenen Wert erreicht hat, veranlasst die Quantencomputerüberwachungsvorrichtung (QUV) bevorzugt eine Sperrung des Geräts (GR) bzw. eine Einnahme eines sicheren Zustands des Geräts (GR) bis zur Abschaltung der Quantencomputerüberwachungsvorrichtung (QUV).

Typischerweise ist das mit dem Quantencomputer (QC) verbindbare Gerät (GR) ein System eines Fahrzeugs, ein System eines Motorrads, ein System eines Flugkörpers, ein System eines Flugzeugs eines Schwimmkörpers oder ein System eines Flugzeugs eines Roboters oder ein System eines Flugzeugs eines Flugzeugs oder ein System eines Flugzeugs eines Satelliten oder ein System eines Flugzeugs eines Waffensystems. Hierbei soll ein Flugkörper alle Arten fliegender Vorrichtungen umfassen. Ein Schwimmkörper soll dabei alle Arten schwimmender und tauchender Vorrichtungen, also insbesondere auch Boote, Schiffe, Bojen, Torpedos, Minen, Jet-Skis, U-Boote etc., umfassen.

Ein Flugkörper soll dabei auch alle Arten fliegender Objekte umfassen, also auch aber nicht nur Flugzeuge, Drohnen, Segelflugzeuge, Luftschiffe, Helikopter, VTOL-Vorrichtungen, Geschosse, Raketen etc.

Ein Satellit soll dabei alle Vorrichtungen umfassen, die für einen Betrieb im Weltraum und/oder erdnahen Orbit vorgesehen sind, also unbemannte und bemannte Satelliten, unbemannte und bemannte Raumfahrzeuge, Raumstationen etc.

Die Quantencomputerüberwachungsvorrichtung (QUV) veranlasst beim Einschalten eine Sperrung des Geräts (GR) und/oder die Einnahme eines sicheren Zustands durch das Gerät (GR), bis die Quantencomputerüberwachungsvorrichtung (QUV) Fehlerfreiheit, insbesondere bei den vorausgehend erwähnten Punkten erkennt.

Bevorzugt sind durch den Quantencomputer (QC) und/oder eine übergeordnete zentrale Steuereinheit (ZSE) der Fehlerzähler und Einzelfehler aus der Quantencomputerüberwachungsvorrichtung (QUV) auslesbar.

Die Quantencomputerüberwachungsvorrichtung (QUV) bestimmt die Zeitpunkte der Antworten des Quantencomputers (QC) und die Auftragsbestätigungen durch wenigstens einen internen Zähler (ICNT) oder Zeitgeber der Quantencomputerüberwachungsvorrichtung (QUV).

Typischerweise hängt eine Antwort des Quantencomputers (QC) bevorzugt in Form eines Quantencomputerberechnungsergebnisses im Sinne des hier vorgelegten Dokuments von mindestens einer Manipulation eines Quantenbits des Quantencomputers ab.

Ein Quantencomputersystem kann beispielsweise mehrere Quantencomputer, bevorzugt aber mindestens zwei Quantencomputer aufweisen. Dies sind in dieser Minimalkonfiguration eines Quantencomputersystems dann ein erster Quantencomputer (QC1) und ein zweiter Quantencomputer (QC2). Über mindestens eine Signalverbindung (DB) kann von dem ersten Quantencomputer (QC1) eine Signalisierung an den zweiten Quantencomputer (QC2) erfolgen. Diese Signalverbindung ist typischerweise ein Datenbus, der beispielsweise die Steuerrechner (µC) der Quantencomputer über jeweilige Datenschnittstellen der Steuerrechner der Quantencomputer miteinander verbindet.

Bevorzugt ist in vielen Fällen dabei die Signalisierung ein Quantencomputerberechnungsergebnis, das der eine Quantencomputer an den anderen beispielsweise als Vergleichsergebnis übermittelt. Ein Quantencomputerberechnungsergebnis ist dabei im Sinne des hier vorgelegten Dokuments das Berechnungsergebnis eines Quantencomputers (QC) unter Zuhilfenahme mindestens einer Manipulation eines Quantenbits dieses Quantencomputers.

Der zweite Quantencomputer (QUC2) vergleicht das das Quantencomputerberechnungsergebnis des ersten Quantencomputers (QC1), das er bevorzugt über den Datenbus (DB) erhalten hat mit einem Erwartungswert.

Der Erwartungswert ist typischerweise selbst das Quantencomputerberechnungsergebnis einer Quantencomputerberechnung des zweiten Quantencomputers (QC2) oder eines anderen Quantencomputers. Das Erwartungsergebnis ist typischerweise mit Toleranzwerten versehen, die der zweite Quantencomputer (QC2) typischerweise durch mehrere gleiche Quantencomputerberechnungen mehrerer Quantencomputerberechnungsergebnisse ermittelt hat.

Der zweite Quantencomputer (QC2) überprüft dann typischerweise das Quantencomputerberechnungsergebnis des Quantencomputers (QC1). Der er zweite Quantencomputer (QC2) schließt auf einen Fehlerzustand des ersten Quantencomputers (QC1) schließt, wenn das Quantencomputerberechnungsergebnis des ersten Quantencomputers (QC1) nicht innerhalb einer vorbestimmten erlaubten Lösungsmenge für das das Quantencomputerberechnungsergebnis des ersten Quantencomputers (QC1) liegt.

Der zweite Quantencomputer (QC2) erstellt bevorzugt eine Statistik mehrerer Ergebnisse gleichartiger Quantencomputerberechnungen des ersten Quantencomputers (QC1) und schließt auf einen Fehler, wenn die Quantencomputerberechnungsergebnisse des ersten Quantencomputers (QC2) häufiger als ein vorgegebener Maximalwert von einem erwarteten Quantencomputerberechnungsergebnis des ersten Quantencomputers (QC2) abweichen.

Der zweite Quantencomputer (QC2) erstellt bevorzugt eine erste Statistik mehrerer Ergebnisse gleichartiger Quantencomputerberechnungen des ersten Quantencomputers (QC) und schließt auf einen Fehler, wenn die Quantencomputerberechnungsergebnisse des ersten Quantencomputers (QC) häufiger als ein vorgegebener Maximalwert von einer zweiten Statistik mehrerer Ergebnisse entsprechender gleichartiger Quantencomputerberechnungen des zweiten Quantencomputers (QC2) oder eines anderen Quantencomputers abweichen.

Der zweite Quantencomputer (QC2) signalisiert im Falle des Schließens auf einen Fehler dem ersten Quantencomputer (QC1) oder einem übergeordneten System (ZSE) das Auftreten dieses Fehlers und/oder hält eine Information über diesen Fehler bereit, die dann typischerweise über den Datenbus /DB) beispielsweise von einer übergeordneten zentralen Steuereinrichtung (ZSE) ausgelesen werden kann.

Die Signalisierung des zweiten Quantencomputers (QC2) kann beispielsweise den ersten Quantencomputer (QC1) zurücksetzen werden oder in einen vordefinierten Zustand versetzen oder in einen Zustand aus einer Menge vordefinierter Zustände versetzen.

Der erste Quantencomputer (QC1) bringt im Falle eines Zurücksetzens seine Quantenbits bevorzugt in eine vorbestimmte Kombination überlagerter Quantenzustände.

Der erste Quantencomputer (QC1) nimmt beispielsweise beim Auftreten einer von ersten Quantencomputer (QC1) selbst erkannten Fehlfunktion zur Auslösung einer von dem zweiten Quantencomputer (QC2) stammenden Rücksetz-Funktion eine gezielte Fehlansteuerung des zweiten Quantencomputers (QC2), insbesondere durch Übermittlung eines falschen Quantencomputerberechnungsergebnisses des ersten Quantencomputers (QC1) an den zweiten Quantencomputer (QC2), vor.

Der zweite Quantencomputer (QC2) schließt auf einen Fehler, wenn der erste Quantencomputer (QC1) ein Quantencomputerberechnungsergebnis des ersten Quantencomputers (QC1) vor einem vorbestimmten zweiten Zeitpunkt an den zweiten Quantencomputer (QC2) übermittelt, wobei dieser vorbestimmte zweite Zeitpunkt nach dem vorbestimmten Zeitpunkt liegt oder gleich dem vorbestimmten Zeitpunkt ist.

Der zweite Quantencomputer (QC2) schließt auf einen Fehler, wenn der erste Quantencomputer (QC1) ein Quantencomputerberechnungsergebnis des ersten Quantencomputers (QC1) nach einem vorbestimmten dritten Zeitpunkt an den zweiten Quantencomputer (QC2) übermittelt, wobei dieser vorbestimmte dritte Zeitpunkt nach dem vorbestimmten Zeitpunkt liegt oder gleich dem vorbestimmten Zeitpunkt ist.

Der zweite Quantencomputer (QC2) signalisiert bevorzugt dem ersten Quantencomputer (QC1) vor Beginn des vorbestimmten Zeitraums, welche vorbestimmte Quantencomputerberechnung bzw. welche vorbestimmten Quantencomputerberechnungen der erste Quantencomputer (QC1) durchführen soll.

Der zweite Quantencomputer (QC2) signalisiert dem ersten Quantencomputer (QC1) den Beginn und ggf. das Ende oder die Dauer des vorbestimmten Zeitraums.

Die besagte Fehlansteuerung erfolgt bevorzugt durch zu häufige Bedienung (Ansteuerung) des zweiten Quantencomputers (QC2).

Der erste Quantencomputer (QC1) nimmt bevorzugt eine Überwachung auf eine Fehlfunktion bei sich selbst und/oder bei anderen Bauelementen und/oder Quantencomputersystem-Bestandteilen vor. D.h. Dass der erste Quantencomputer (QC1) und zwar insbesondere der Steuerrechner (µC) des ersten Quantencomputers (QC1) bevorzugt über Mittel, beispielsweise eine JTAG-Schnittstelle, zum Überprüfen anderer Bauelementen und/oder Quantencomputersystem-Bestandteile verfügt.

Das vorgeschlagene Quantencomputersystem kann mehrere, bevorzugt wenigstens zwei Quantencomputern umfassen. Diese sind bevorzugt ein erster Quantencomputer (QC1) und ein zweiter Quantencomputer (QC2). Des Weiteren umfasst das Quantencomputersystem bevorzugt mehrere Messeinrichtungen zur Erfassung von Betriebsgrößen des Quantencomputersystems (QUSYS) oder einer Vorrichtung oder eines Systems. Ggf. hängen die Zustände der Vorrichtung bzw. des Systems von dem Quantencomputersystem (QUSYS) und zwar typischerweise von Quantencomputerberechnungsergebnissen eines oder mehrerer Quantencomputer des Quantencomputersystems ab. Beispielsweise kann das Quantencomputersystem die Vorrichtung bzw. das System steuern. Der erste Quantencomputer (QC1) führt dabei typischerweise zumindest zweitweise die gleiche Quantencomputerberechnung durchführt, die der zweite Quantencomputer (QC2) durchführt. Die Quantencomputerberechnung umfasst bevorzugt dabei eine Überwachungsmaßnahme zur Überprüfung der Funktionsfähigkeit des jeweiligen Quantencomputers (QC1, QC2). Der erste Quantencomputer (QC1) führt dabei die Quantencomputerberechnung des ersten Quantencomputers (QC1) unabhängig von der Quantencomputerberechnung des zweiten Quantencomputers (QC2) durch.

Der erste Quantencomputer (QC1) führt dabei typischerweise die Überwachungsmaßnahme durch und der zweite Quantencomputer (QC2) führt eine dieser Überwachungsmaßnahme entsprechende äquivalente Überwachungsmaßnahme in einfacherer Ausführung bzw. einer anderen Strategie folgend auf einem redundanten Pfad durch. Hierbei kann es sich beispielsweise um eine konventionelle Berechnung durch den Steuerrechner des zweiten Quantencomputers handeln. Der erste Quantencomputer (QC1) kann beispielsweise eine Überwachungsmaßnahme anhand der Differenz zwischen einem in Abhängigkeit von einem vorgebbaren oder einspeisbaren Sollwert und einem Istwert eines Regelkreises eines Stellelements vornehmen, während der zweite Quantencomputer (QC2) Überwachungsmaßnahmen einfacherer Art anhand eines Plausibilitätsvergleichs zwischen dem vorgebbaren oder einspeisbaren Sollwert, vorzugsweise der Stellung eines Bedienelements, und der Stellung des Stellelements durchführt.

Besonders bevorzugt überwachen sich also in diesem Beispiel die Quantencomputer gegenseitig durch Datenaustausch über eine jeweilige Datenschnittstelle desjeweiligen Steuerrechners des jeweiligen Quantencomputers und den Datenbus.

In vielen möglichen Anwendungen eines solchen Quantencomputersystems in einem Regelkreis haben beispielsweise beide Quantencomputer des Quantencomputersystems Zugriff zu einer Treiberstufe für das Stellelement des Regelkreises und schalten im erkannten Fehlerfall bei Unplausibilitäten in Bezug auf den Regelkreis der Anwendung und der von den Quantencomputern direkt oder indirekt erzeugte Stellungssignale des Stellglieds des Regelkreises unabhängig voneinander gemäß dem Ergebnis der ihnen jeweils zugeordneten Überwachungsmaßnahmen die Treiberstufe ab. Alternativ können sie diese in einen sicheren Zustand bringen. Bevorzugt unterrichten sich die Quantencomputer insbesondere über das negative Ergebnis ihrer Überwachungen gegenseitig.

Im Fehlerfall kann als Gegenmaßnahme beispielsweise der erste Quantencomputer (QC1) in die Energiezufuhr eines Anwendungssystems oder in das Anwendungssystem selbst eingreifen.

Im zweiten Quantencomputer (QC2) werden bevorzugt Plausibilitätsüberprüfungen zum Ein- bzw. Ausschalten eines Reglers des beispielhaften Anwendungssystems in Form einer Regelschleife durchgeführt.

Die Plausibilitätsprüfungen umfassen dabei bevorzugt zumindest Quantencomputerberechnung, die zumindest eine Manipulation eines Quantenbits des zweiten Quantencomputers (QC2) umfasst. Bei einem Verfahren zur Überwachung des Ablaufs eines auf mindestens einem Steuerrechner (µC) eines Quantencomputers (QC) ablauffähigen Quantencomputerprogramms mittels einer Quantencomputerüberwachungsvorrichtung (QUV) des Quantencomputers (QC) umfasst bevorzugt der Quantencomputer (QC) Quantenbits und den Steuerrechner (µC) und erste Mittel zur Manipulation von Quantenbits des Quantencomputers (QC) und zweite Mittel zum Auslesen des Zustands von Quantenbits des Quantencomputers (QC). Die ersten Mittel zur Manipulation von Quantenbits des Quantencomputers (QC) und die zweiten Mittel zum Auslesen des Zustands von Quantenbits des Quantencomputers (QC) werden dabei typischerweise durch den Steuerrechner (µC) gesteuert. Die Quantencomputerüberwachungsvorrichtung (QUV) kann bevorzugt bei einer Manipulation einer vorbestimmten Teilmenge der Quantenbits der Quantenbits des Quantencomputers (QC) während der Quantencomputerprogrammlaufzeit eine Ausnahmebedingung (Exception), insbesondere verbunden mit einer Unterbrechung (Interrupt) des Quantencomputerprogrammablaufs, auslösen. Dies bedeutet, wenn ein Quantenbit, das nicht manipuliert werden soll manipuliert wird. Hierzu verfügt die Quantencomputerüberwachungsvorrichtung bevorzugt über Mittel, um eine Aktivierung von Mitteln zur Manipulation dieser Quantenbits, die eigentlich nicht manipuliert werden sollen oder besonders geschützte Quantenbits (QUP) sind, zu erkennen und zu erfassen, auf einen Fehler zu schließen und ggf. Gegenmaßnahmen zu ergreifen.

Die Quantencomputerüberwachungsvorrichtung (QUV) kann beispielsweise auch beim Zugriff auf einen bestimmten Adressbereich (AB) während der Quantencomputerprogrammlaufzeit eine Ausnahmebedingung (Exception), insbesondere eine Unterbrechung (Interrupt) des Quantencomputerprogrammablaufs, auslösen.

Der Steuerrechner (µC) des Quantencomputers (QC) durchläuft bevorzugt nach dem Auslösen einer Ausnahmebedingung während der Quantencomputerprogrammlaufzeit eine Ausnahmebedingungs-Routine (Exception-Routine).

Die Ausnahmebedingungs-Routine (Exception-Routine) kann beispielsweise auch zumindest eine Quantenoperation zur Manipulation zumindest eines Quantenbits (QUB) des Quantencomputers (QC) umfassen.

Der Steuerrechner (µC) des Quantencomputers (µC) oder eine zentrale Steuereinheit (ZSE) oder ein Steuerrechner eines anderen Quantencomputers oder ein anderes Rechnersystem kann in einem Beispiel die Quantencomputerüberwachungsvorrichtung (QUV) konfigurieren.

Bevorzugt wird Quantencomputerüberwachungsvorrichtung (QUV) während des Hochfahrens des Quantencomputers (QC) konfiguriert.

Der Quantencomputer (QC) wird bevorzugt während des Durchlaufs der Exception-Routine rückgesetzt und erneut hochgefahren und das überwachte Quantencomputerprogramm initialisiert. Vor dem Rücksetzen und dem erneuten Hochfahren des Quantencomputers (QC) und vor der Initialisierung des Quantencomputerprogramms wird bevorzugt zumindest die Art des Fehlerzustandes, insbesondere durch den Steuerrechner (µC), in einem Fehlerspeicher, insbesondere innerhalb eines Speichers (MEM) des Quantencomputers (QC), abgelegt.

Vor dem Rücksetzen und dem erneuten Hochfahren des Quantencomputers (QC) und vor der Initialisierung des Quantencomputerprogramms wird die Speicheradresse, auf die durch den Steuerrechner (µC) vor Auftreten des Fehlerzustandes zugegriffen wurde, insbesondere durch den Steuerrechner (µC), in dem Fehlerspeicher insbesondere innerhalb eines Speichers (MEM) des Quantencomputers (QC) abgelegt.

Die Quantencomputerüberwachungsvorrichtung (QUV) überwacht bevorzugt, ob das Quantencomputerprogramm während der Quantencomputerprogrammlaufzeit auf einen vorgebbaren Adressbereich (AB) eines Speichers (MEM) des Quantencomputers (QC) zugreift.

Die Quantencomputerüberwachungsvorrichtung (QUV) überwacht bevorzugt, ob das Quantencomputerprogramm während der Quantencomputerprogrammlaufzeit auf einen Adressbereich (AB) eines Stacks des Quantencomputers (QC) innerhalb eines Speichers (MEM) des Quantencomputers (QC) jenseits einer vorgebbaren maximalen Stack-Größe, die insbesondere einem vorgebbaren Adressbereich (AB) entsprechen kann, zugreift.

Die Quantencomputerüberwachungsvorrichtung (QUV) überwacht, ob das Quantencomputerprogramm während der Quantencomputerprogrammlaufzeit den Steuerrechner (µC) dazu veranlasst, mittels der ersten Mittel eine vorgebbare Teilmenge von Quantenbits der Quantenbits des Quantencomputers (QC) mittels einer Quantenbitoperation zu manipulieren.

Die Quantencomputerüberwachungsvorrichtung (QUV) überwacht, ob das Quantencomputerprogramm während der Quantencomputerprogrammlaufzeit den Steuerrechner (µC) des Quantencomputers (QC) dazu zu veranlassen, mittels erste r Mittel Quantenbits des Quantencomputers (QC) zu manipulieren, die nicht Teil der vorgebbaren Teilmenge von Quantenbits der Quantenbits des Quantencomputers (QC) sind.

Die Quantencomputerüberwachungsvorrichtung (QUV) überwacht, ob während der Quantencomputerprogrammlaufzeit, insbesondere durch den Steuerrechner (µC), versucht wird, eine aus einem nicht flüchtigen Speicher (NVM) des Quantencomputers (QC) in einen Random-Access-Speicher (RAM) des Quantencomputers (QC) ausgelagerte Code-Sequenz des Quantencomputerprogramms in dem nicht flüchtigen Speicher (NVM) zur Ausführung zu bringen. Das hier vorgelegte Dokument behandelt darüber hinaus ein Steuerelement (NVM), insbesondere Read-Only-Memory oder Flash-Memory oder nicht flüchtiger Speicher, für einen Quantencomputer (QC) insbesondere eines Steuergeräts (SG) eines Fahrzeugs, wobei auf dem Steuerelement (NVM) ein Quantencomputerprogramm abgespeichert ist, das auf mindestens einem Steuerrechner (µC) des Quantencomputers (1) ablauffähig und zur Ausführung eines Verfahrens, wie zuvor beschrieben, geeignet ist.

Das hier vorgelegte Dokument behandelt darüber hinaus einen Quantencomputer (QC) mit mindestens einem Steuerrechner (µC) und einer Quantencomputerüberwachungsvorrichtung (QUV), wobei auf dem mindestens einen Steuerrechner (µC) ein Quantencomputerprogramm ablauffähig ist, die Quantencomputerüberwachungsvorrichtung (QUV) während der Quantencomputerprogrammlaufzeit den Ablauf des Programms überwacht und beim Zugriff auf einen bestimmten Adressbereich (AB) innerhalb eines Speichers (MEM) des Quantencomputers (QC) eine Ausnahmebedingung (Exception), insbesondere eine Unterbrechung (Interrupt) des Quantencomputerprogrammablaufs, auslöst. Der Steuerrechner (µ) oder eine zentrale Steuereinheit (ZSE) oder ein anderes Rechnersystem konfiguriert dabei bevorzugt die Quantencomputerüberwachungsvorrichtung (QUV). Der Quantencomputer (QC) umfasst bevorzugt Mittel zum Durchlaufen einer Ausnahmebedingungs-Routine (Exception-Routine) nach dem Auslösen einer Ausnahmebedingung während der Quantencomputerprogrammlaufzeit.

Bevorzugt weist Quantencomputer (QC) weitere Mittel zur Ausführung des zuvor beschriebenen Verfahrens auf.

Ein anderes Verfahren zum Betrieb eines Quantencomputersystems (QUSYS) mit einem Quantencomputer (QC) und mit einer Quantencomputerüberwachungsvorrichtung (QUV) umfasst die Schritte
- Überwachen des korrekten Quantencomputerprogrammablaufs des Quantencomputerprogramms des Quantencomputers (QC), insbesondere durch die Quantencomputerüberwachungsvorrichtung (QUV), und
- Durchführen vorbestimmter Quantencomputerberechnungen mit mindestens einer Quantenoperation zur Berechnung vorbestimmter Quantencomputerberechnungsergebnisse in vorbestimmten Zeiträumen vor vorbestimmten Zeitpunkten, insbesondere durch den Quantencomputer (QC), und
- Ansteuern einer Quantencomputerüberwachungsvorrichtung (QUV) nach diesen vorbestimmten Zeitpunkten und Durchführung eines Rücksetzens (Reset-Funktion) des Quantencomputers (QC) auf einen Quantencomputerprogrammstart oder dergleichen, wenn diese Ansteuerung nicht in vorbestimmter Weise erfolgt durchführt.

Ein zusätzlicher weiterer Schritt kann das Übermitteln zumindest eines Ergebnisses einer vorbestimmten Quantencomputerberechnung des Quantencomputers (QC) an die Quantencomputerüberwachungsvorrichtung (QUV) bei dieser Ansteuerung sein.

Ein zusätzlicher weiterer Schritt kann das Überprüfen des an die Quantencomputerüberwachungsvorrichtung (QUV), insbesondere durch den Quantencomputer (QC) übermittelten Quantencomputerberechnungsergebnisses der vorbestimmten Quantencomputerberechnung des Quantencomputers (QC) sein.

Ein zusätzlicher weiterer Schritt kann das Schließen auf einen Fehlerzustand des Quantencomputers (QC), wenn das Quantencomputerberechnungsergebnis der vorbestimmten Quantencomputerberechnung des Quantencomputers (QC) nicht innerhalb einer vorbestimmten erlaubten Lösungsmenge für das das Quantencomputerberechnungsergebnis der vorbestimmten Quantencomputerberechnung des Quantencomputers (QC) liegt, sein.

Zusätzliche weitere Schritte können das Erstellen einer Statistik mehrerer Quantencomputerberechnungsergebnisse gleichartiger vorbestimmter Quantencomputerberechnungen des Quantencomputers (QC), die der Quantencomputerüberwachungsvorrichtung (QUV) insbesondere durch den Quantencomputer (QC) übermittelt wurden, und das Schließen auf einen Fehler insbesondere durch die Quantencomputerüberwachungsvorrichtung sein. Dabei erfolgt dieses Schließen auf einen Fehler, wenn die Quantencomputerberechnungsergebnisse der vorbestimmten Quantencomputerberechnungen des Quantencomputers (QC) mit einer ersten Anzahl häufiger als ein vorgegebener erster Maximalwert von einem erwarteten Quantencomputerberechnungsergebnis des Quantencomputers (QC) für diese Quantencomputerberechnungen abweichen.

Die Zählung der ersten Anzahl der Abweichungen von dem erwarteten Quantencomputerberechnungsergebnis des Quantencomputers (QC) für diese Quantencomputerberechnungen wird bevorzugt wieder auf einen vorgegebenen ersten Startwert dieses Zählwerts dieser Zählung, insbesondere auf 0, zurückgesetzt, wenn eine zweite Anzahl von Quantencomputerberechnungsergebnissen aufeinanderfolgender Quantencomputerberechnungen häufiger als ein vorgegebener zweiter Maximalwert mit einem erwarteten Quantencomputerberechnungsergebnis des Quantencomputers (QC) für diese Quantencomputerberechnungen in vorgegebener Weise übereinstimmt.

Ein zusätzlicher weiterer Schritt kann die Signalisierung des Auftretens eines Fehlers, insbesondere durch die Quantencomputerüberwachungsvorrichtung (QUV), an den Quantencomputer (QC) oder an ein übergeordnetes System im Falle des Schließens auf einen Fehler, insbesondere durch die Quantencomputerüberwachungsvorrichtung (QUV), und/oder das Bereithalten einer Information über das Auftretens eines Fehlers, insbesondere durch die Quantencomputerüberwachungsvorrichtung (QUV), im Falle des Schließens auf einen Fehler, insbesondere durch die Quantencomputerüberwachungsvorrichtung (QUV), sein.

Ein zusätzlicher weiterer Schritt kann das Zurücksetzen des Quantencomputers (QC) durch die Signalisierung, insbesondere der Quantencomputerüberwachungsvorrichtung (QUV), sein. Bevorzugt umfasst das Zurücksetzen des Quantencomputers (QC) durch die Signalisierung ein Zurücksetzen des Steuerrechners (µC) des Quantencomputers (QC).

Bevorzugt veranlasst das Zurücksetzen des Quantencomputers (QC) durch die Signalisierung den Quantencomputer (QC) dazu, zumindest einen Teil der Quantenbits des Quantencomputers in einen vorbestimmten und/oder vorbestimmbaren Zustand und/oder in eine vorbestimmte Überlagerung mehrerer vorbestimmter Zustände zu bringen.

Bevorzugt veranlasst das Zurücksetzen des Quantencomputers (QC) durch die Signalisierung den Quantencomputer (QC) dazu, zumindest eine vorbestimmte Quantencomputerberechnung durchzuführen.

Bevorzugt übermittelt der Quantencomputer (QC) das Quantencomputerberechnungsergebnis dieser Quantencomputerberechnung an die Quantencomputerüberwachungsvorrichtung (QUV).

Bevorzugt überprüft die Quantencomputerüberwachungsvorrichtung (QUV) das Quantencomputerberechnungsergebnis dieser Quantencomputerberechnung des Quantencomputers (QC).

Ein zusätzlicher weiterer Schritt kann das Manipulieren von Quantenbits der Quantenbits des Quantencomputers (QC), insbesondere durch den Quantencomputer (QC), in der Art umfassen, dass eine Einstellung dieser Quantenbits des Quantencomputers (QC) in eine vorbestimmte Kombination überlagerter Quantenzustände im Falle eines Zurücksetzens des Quantencomputers, insbesondere durch den Quantencomputer (QC), erfolgt.

Ein zusätzlicher weiterer Schritt kann das Vornehmen einer gezielten Fehlansteuerung der Quantencomputerüberwachungsvorrichtung (QUV), insbesondere durch Übermittlung eines falschen Quantencomputerberechnungsergebnis insbesondere durch den Quantencomputer (QC) insbesondere an die Quantencomputerüberwachungsvorrichtung (QUV), beim Auftreten einer vom Quantencomputer (QC) und zwar insbesondere von dessen Steuerrechner (µC) oder einer anderen Hilfsvorrichtung des Quantencomputers (QC) selbst erkannten Fehlfunktion des Quantencomputers (QC) oder eines seiner Hilfsaggregate zur Auslösung einer von der Quantencomputerüberwachungsvorrichtung (QUV) stammenden Rücksetzfunktion, sein.

Bevorzugt löst die von der Quantencomputerüberwachungsvorrichtung (QUV) stammende Rücksetzfunktion ein Zurücksetzen des Steuerrechners (µC) des Quantencomputers (QC) aus.

Die von der Quantencomputerüberwachungsvorrichtung (QUV) stammende Rücksetzfunktion veranlasst bevorzugt den Quantencomputer (QC) dazu, zumindest einen Teil der Quantenbits des Quantencomputers in einen vorbestimmten und/oder vorbestimmbaren Zustand und/oder in eine vorbestimmte Überlagerung mehrerer vorbestimmter Zustände zu bringen.

Die von der Quantencomputerüberwachungsvorrichtung (QUV) stammende Rücksetzfunktion veranlasst bevorzugt den Quantencomputer (QC) dazu, zumindest eine vorbestimmte Quantencomputerberechnung durchzuführen.

Der Quantencomputer (QC) übermittelt bevorzugt das Quantencomputerberechnungsergebnis dieser Quantencomputerberechnung an die Quantencomputerüberwachungsvorrichtung (QUV).

Die Quantencomputerüberwachungsvorrichtung (QUV) überprüft typischerweise das Quantencomputerberechnungsergebnis dieser Quantencomputerberechnung des Quantencomputers (QC).

Ein zusätzlicher weiterer Schritt kann das Schließen auf einen Fehler, insbesondere durch die Quantencomputerüberwachungsvorrichtung (QUV), sein, wenn die Übermittlung eines Quantencomputerberechnungsergebnisses, insbesondere durch den Quantencomputer (QC) insbesondere durch Quantencomputerüberwachungsvorrichtung (QUV) vor einem vorbestimmten zweiten Zeitpunkt erfolgt. Dabei liegt typischerweise dieser vorbestimmte zweite Zeitpunkt nach dem vorbestimmten Zeitpunkt oder ist gleich dem vorbestimmten Zeitpunkt.

Ein zusätzlicher weiterer Schritt kann das Schließen auf einen Fehler, insbesondere durch die Quantencomputerüberwachungsvorrichtung (QUV), sein, wenn die Übermittlung eines Quantencomputerberechnungsergebnisses, insbesondere durch den Quantencomputer (QC) insbesondere an die Quantencomputerüberwachungsvorrichtung (QUV), nach einem vorbestimmten dritten Zeitpunkt erfolgt. Dabei liegt bevorzugt dieser vorbestimmte dritte Zeitpunkt nach dem vorbestimmten Zeitpunkt oder ist gleich dem vorbestimmten Zeitpunkt.

Ein zusätzlicher weiterer Schritt kann die Signalisierung an den dem Quantencomputer, insbesondere durch die Quantencomputerüberwachungsvorrichtung (QUV), vor Beginn des vorbestimmten Zeitraums sein, welche vorbestimmte Quantencomputerberechnung bzw. welche vorbestimmten Quantencomputerberechnungen der Quantencomputer (QC) durchführen soll.

Ein zusätzlicher weiterer Schritt kann die Signalisierung, insbesondere durch die Quantencomputerüberwachungsvorrichtung (QUV), des Zeitpunkts des Beginns des vorbestimmten Zeitraums und ggf. des Zeitpunkts des Endes des vorbestimmten Zeitraums oder der Dauer des vorbestimmten Zeitraums an den Quantencomputer (QC) sein.

Ein zusätzlicher weiterer Schritt kann das Schließen auf einen Fehler, insbesondere durch die Quantencomputerüberwachungsvorrichtung (QUV), sein, wenn ein Ansteuern der Quantencomputerüberwachungsvorrichtung, insbesondere durch den Quantencomputer (QC), innerhalb eines weiteren Zeitraums zu häufig, insbesondere häufiger als ein Ansteuererwartungswert, erfolgt.

Ein zusätzlicher weiterer Schritt kann die Überwachung des Quantencomputers (QC) auf eine Fehlfunktion des Quantencomputers (QC) durch den Quantencomputer (QC) selbst und/oder die Überwachung auf eine Fehlfunktion anderer Bauelemente und/oder Funktionselemente des Quantencomputersystems (QUSYS) durch den Quantencomputer (QC) und/oder die Überwachung auf eine Fehlfunktion von Quantencomputersystem-Bestandteilen durch den Quantencomputer (QC) selbst sein.

Des Weiteren beschreibt das hier vorgelegte Dokument ein Verfahren zur Überwachung des korrekten Quantencomputerprogrammablaufs eines mit Quantencomputerüberwachungsvorrichtung (QUV) versehenen Quantencomputersystems (QUSYS), insbesondere unter Verwendung eines der vorbeschriebenen Verfahren. Das Quantencomputersystem (QUSYS) umfasst einen Quantencomputer (QC), wobei der Quantencomputer (QC) in bestimmten Zeitabständen die Quantencomputerüberwachungsvorrichtung (QUV), insbesondere über einen Datenbus (DB) mittels einer Nachricht, ansteuert, und wobei die Quantencomputerüberwachungsvorrichtung (QUV) ohne diese Ansteuerung ein Rücksetzten (Reset-Funktion) des Quantencomputers (QC) auslöst.

Dabei veranlasst typischerweise das Rücksetzen den Steuerrechner (µC) des Quantencomputers (QC) dazu, auf den Quantencomputerprogrammstart oder einen anderen vorbestimmten Programmpunkt des Quantencomputerprogramms zu springen.

Das Rücksetzen veranlasst typischerweise den Steuerrechner (µC) des Quantencomputers (QC) dazu, zumindest Quantenbits des Quantencomputers (QC) in einen vordefinierten oder vordefinierbaren Quantenzustand oder in eine vordefinierte oder vordefinierbare Überlagerung solcher Quantenzustände zu bringen, wobei diese Quantenbits zumindest einen Teil der Quantenbits des Quantencomputers (QC) umfassen.

Bevorzugt nimmt der Quantencomputer (QC) beim Auftreten einer von ihm erkannten Fehlfunktion zur Auslösung einer von der Quantencomputerüberwachungsvorrichtung (QUV) stammenden Rücksetz-Funktion eine gezielte Fehlansteuerung der Quantencomputerüberwachungsvorrichtung (QUV) vor.

Abschließend sei noch angemerkt, dass ein Quantensensorsystem mit einem oder mehreren Quantenpunkten als Sensorelementen als ein Quantencomputer im Sinne dieser Offenbarung verstanden werden kann und damit ggf. unter die Beanspruchung fällt, wenn das Quantensensorsystem eine Quantensensorüberwachungsvorrichtung umfasst, die in ihren Eigenschaften einer Quantencomputerüberwachungsvorrichtung (QUV) im Sinne des hier vorgelegten Dokuments entspricht.

### Vorteil

Mit Hilfe einer Quantenüberwachungsvorrichtung (QUV) und der zugehörigen Verfahren kann verhindert werden, dass Quantencomputer, die ein System steuern, Zustände dieses Systems einstellen oder ansteuern, die sicherheitskritisch sind.

### Liste der Figuren

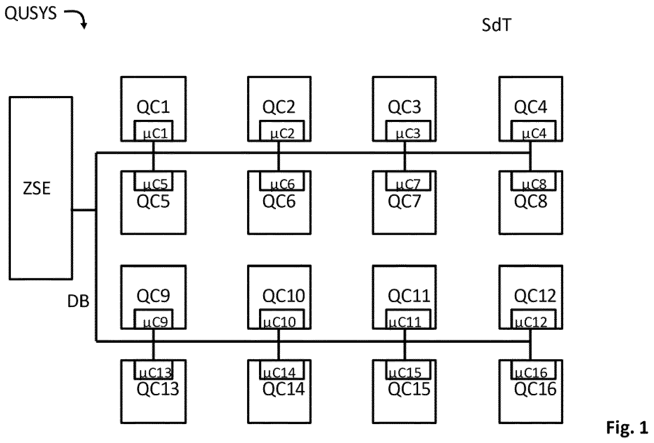

Figur 1
   zeigt ein Quantencomputersystem(QSYS) der zum Zeitpunkt der Anmeldung der prioritätsgebenden Patentanmeldung DE 10 2021 110 964.7 vom 28. April 2021 des hier vorgelegten Dokuments noch unveröffentlichten internationalen Patentanmeldung WO 2021 083 448 A1.
Figur 2
   entspricht der Figur 1 mit dem Unterschied, dass nun eine vorschlagsgemäße Quantencomputerüberwachungsvorrichtung (QUV) die Funktion der Quantencomputer überwachen und ggf. testen kann.
Figur 3
   zeigt das mögliche Zusammenwirken eines einzelnen Quantencomputers (QC) mit einer Quantencomputerüberwachungsvorrichtung (QUV) und einem Gerät (GR) und einer Systemkomponente (SYSC).
Figur 4
   zeigt eine Situation in der die Quantencomputerüberwachungsvorrichtung (QUV) Teil des Quantencomputers (QC) ist.

### Beschreibung der Figuren

### Figur 1

Figur 1 zeigt ein Quantencomputersystem(QSYS) der zum Zeitpunkt der Anmeldung der prioritätsgebenden Patentanmeldung DE 10 2021 110 964.7 vom 28. April 2021 des hier vorgelegten Dokuments noch unveröffentlichten internationalen Patentanmeldung WO 2021 083 448 A1. Das Quantencomputersystem (QUSYS) der Figur 1 umfasst 16 Quantencomputer (QC1 bis QC16). Die Figur 1 ist daher als Stand der Technik (SdT) gekennzeichnet, auch wenn dies zum Zeitpunkt der Anmeldung der prioritätsgebenden Patentanmeldung DE 10 2021 110 964.7 vom 28. April 2021 des hier vorgelegten Dokuments noch unveröffentlichter Stand der Technik ist. Jeder der 16 Quantencomputer des beispielhaften Quantencomputersystems (QC1 bis QC16) verfügt über jeweils mindestens einen Steuerrechner (µC1 bis µC16). Jeder der 16 Steuerrechner (µC1 bis µC16) der 16 Quantencomputer (QC1 bis QC16) ist über eine Datenbusschnittstelle mit einem Datenbus (DB) verbunden. Eine zentrale Steuereinheit (ZSE) steuert die 16 Quantencomputer (QC1 bis QC16) über den Datenbus (DB).

### Figur 2

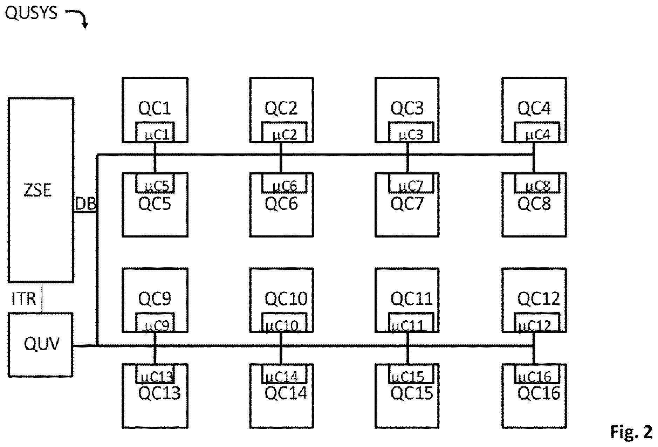

Figur 2 entspricht der Figur 1 mit dem Unterschied, dass nun eine Quantencomputerüberwachungsvorrichtung (QUV) die Funktion der Quantencomputer überwachen und ggf. testen kann. Insbesondere kann sie in dem Beispiel der Figur 2 über eine Interrupt-leitung der zentralen Steuereinheit ein Problem signalisieren. Die zentrale Steuereinheit kann dann ggf. aus Registern der Quantencomputerüberwachungsvorrichtung (QUV) eine Information über die Art des Problems auslesen.

### Figur 3

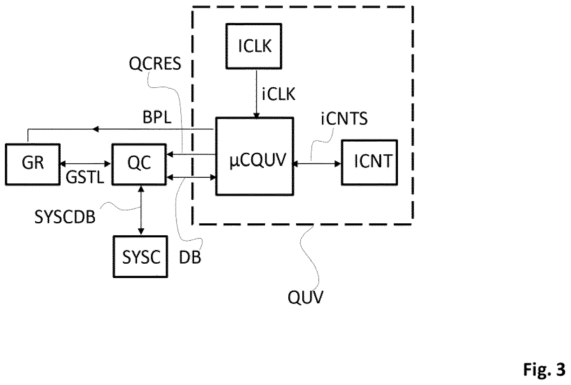

Figur 3 zeigt das mögliche Zusammenwirken eines einzelnen Quantencomputers (QC) mit einer Quantencomputerüberwachungsvorrichtung (QUV) und einem Gerät (GR) und einer Systemkomponente (SYSC). Der Steuerrechner (µCQUV) der Quantencomputerüberwachungsvorrichtung (QUV) überwacht den internen Taktgenerator (ICLK) der Quantencomputerüberwachungsvorrichtung (QUV). Über den Datenbus (DB) tauschen der Quantencomputer (QC) und die Quantencomputerüberwachungsvorrichtung (QUV) Daten etc. aus. Die Quantencomputerüberwachungsvorrichtung (QUV) kann Fehler des Quantencomputers (QC) erfassen und über eine Bypass-Leitung (BPL) das Gerät (GR) in einen sicheren Zustand bringen, falls die Quantencomputerüberwachungsvorrichtung beispielsweise einen Fehler des Quantencomputers (QC) erfasst. Der Quantencomputer (QC) steuert und/oder regelt in dem Beispiel nicht durch eine solche Bypass-Leitung (BOL) abgesichert weitere System-komponenten (SYSC) über beispielhafte weitere Signalleitungen (SYSCDB), die einen Datenbus umfassen können.

Die Quantencomputerüberwachungsvorrichtung (QUV) verfügt in dem Beispiel über einen internen Zähler und/oder Zeitgeber (ICNT). Dieser kann beispielsweise die Pulse eines internen Takts (iCLK) der Quantencomputerüberwachungsvorrichtung (QUV) zwischen zwei Fehlern des Quantencomputers (QC) oder zwischen einem Startsignal und dem Zeitpunkt des Auftretens eines Fehlers des Quantencomputers (QC) und/oder die Anzahl der Fehler des Quantencomputers (QC) und/oder die Anzahl korrekter Quantencomputerberechnungen des Quantencomputers (QC) zählen und/oder die Anzahl fehlerhafter Quantencomputerberechnungen des Quantencomputers (QC) zählen und/oder und/oder die Anzahl von Quantencomputerberechnungen des Quantencomputers (QC) mit einem bestimmten Ergebnis zählen und/oder die Anzahl von Quantencomputerberechnungen des Quantencomputers (QC), die von einem bestimmten Ergebnis abweichen, zählen. Die Quantencomputerüberwachungsvorrichtung (QUV) umfasst typischerweise mehr als einen internen Zähler und/oder Zeitgeber (ICNT). Bevorzugt erfassen diese mehreren internen Zähler und/oder Zeitgeber (ICNT) unterschiedliche Zählereignisse, wie zuvor angedeutet. Auf die obigen Abschnitte wird hier verwiesen. In dem Beispiel der Figur 3 signalisiert Der Steuerrechner (µCQUV) der Quantencomputerüberwachungsvorrichtung (QUV) dem beispielhaften internen Zähler und/oder Zeitgeber (ICNT) mittels einer internen Zählereignissignal (iCNTS) das Auftreten eine zu zählenden Ereignisses. Das I (iCNTS) kann auch ein Tor-Signal für das Zählen der Pulse des internen Takts (iCLK) an den beispielhaften internen Zähler und/oder Zeitgeber (ICNT) sein.

### Figur 4

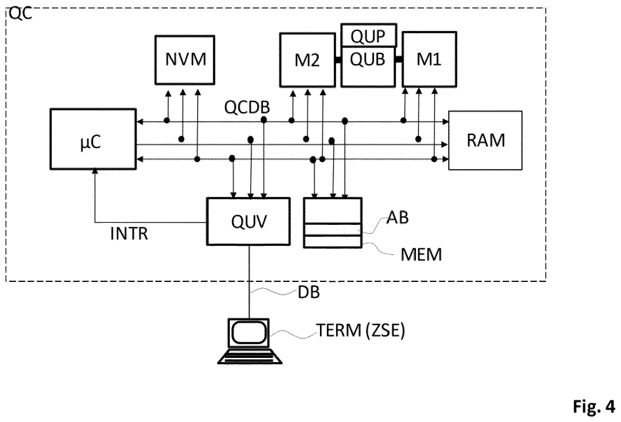

Figur 4 zeigt eine Situation in der eine separate Quantencomputerüberwachungsvorrichtung (QUV) Teil des Quantencomputers (QC) ist. Der Quantencomputer (QC) umfasst einen Steuerrechner (µC), die Quantencomputerüberwachungsvorrichtung (QUV), einen Speicher (MEM) mit einem besonderen Abschnitt (AB) im Speicher (MEM). Des Weiteren umfasst der Quantencomputer (QC) in diesem Beispiel einen nicht flüchtigen Speicher (NVM) und einen Schreib/lese-Speicher (RAM). Als Kern der Vorrichtung umfasst der vorgeschlagene Quantencomputer (QC) ein oder mehrere Quantenbits (QUB). Diese Quantenbits können beispielsweise Elektronspins und/oder Spins von Elektronen Konfigurationen und/oder nukleare Spins sein. Beispielsweise kann es sich um paramagnetische Zentren und/oder magnetische Kernmomente von Atomkernen handeln. Das hier vorgelegte Dokument verweist auf die zum Zeitpunkt der Anmeldung der prioritätsgebenden Patentanmeldung DE 10 2021 110 964.7 vom 28. April 2021 der hier vorgelegten Dokuments noch unveröffentlichten internationalen Patentanmeldung WO 2021 083 448 A1. Der Steuerrechner (µC) des Quantencomputers (QC) kann in diesem Beispiel mit Hilfe erster Mittel (M1) die Quantenbits (QB) manipulieren und mit Hilfe zweiter Mittel (M2) Zustände der Quantenbits (QUB) auslesen. Das hier vorgelegte Dokument verweist auch hier auf die zum Zeitpunkt der Anmeldung der prioritätsgebenden Patentanmeldung DE 10 2021 110 964.7 vom 28. April 2021 der hier vorgelegten Dokuments noch unveröffentlichten internationalen Patentanmeldung WO 2021 083 448 A1. Typischerweise umfassen die Quantencomputer (QC1 bis QC16) des Quantencomputersystems (QUSYS) Ansteuereinheiten als erste Mittel (M1), wie beispielsweise horizontale Treiberstufen (z.B. Bezugszeichen HD1 bis HD3 der Figur 23 der WO 2021 083 448 A1) und/oder die vertikale Treiberstufen (z.B. Bezugszeichen VD1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), treiben. Typischerweise umfasst der Quantencomputer (QC) Auswerteinheiten als zweite Mittel (M2), wie beispielsweise horizontale Empfängerstufen (z.B. Bezugszeichen HS1 bis HS3 der Figur 23 der WO 2021 083 448 A1) und/oder die vertikale Empfängerstufen (z.B. Bezugszeichen VS1 der Figur 23 der WO 2021 083 448 A1), die den Signalverlauf auf den Steuerleitungen, beispielsweise horizontalen Steuerleitungen (z.B. Bezugszeichen LH1 bis LH3 der Figur 23 der WO 2021 083 448 A1) und/oder horizontalen Abschirmleitungen (z.B. Bezugszeichen SH1 bis SH4 der Figur 23 der WO 2021 083 448 A1) und/oder beispielsweise vertikalen Steuerleitungen (z.B. Bezugszeichen LV1 der Figur 23 der WO 2021 083 448 A1) und/oder vertikalen Abschirmleitungen (z.B. Bezugszeichen SV1 bis SV2 der Figur 23 der WO 2021 083 448 A1), erfassen und auswerten. Beispielsweise über einen Testbus als Datenbus (DB) kann ein Terminal (TERM) als zentrale Steuereinheit (ZSE) auf das System des Quantencomputers (QC) zugreifen und beispielsweise die Abarbeitung des Quantencomputerprogramms zu bestimmten Zeiten und/oder Quantencomputerprogrammpunkten und/oder Quantencomputerprogrammadressen und/oder bei bestimmten Quantenoperationen unterbrechen.

Der Steuerrechner (µC), der nicht flüchtige Speicher (NVM), die ersten Mittel (M1), die zweiten Mittel (M2), der Speicher (MEM), der flüchtige Speicher (RAM) und die Quantencomputerüberwachungsvorrichtung (QUV) sind in diesem Beispiel an einen gemeinsamen Quantencomputerdatenbus (QCDB) angeschlossen, der in diesem Beispiel komplett im Innern des Quantencomputers (QC) liegt. Die Quantencomputerüberwachungsvorrichtung (QUV) des Quantencomputers (QC) kann hier über eine Interrupt-Leitung (INTR) den Steuerrechner (µC) beeinflussen. Letztlich legt die hier vorgelegte Schrift eine Quantencomputerüberwachungsvorrichtung (QUV) eines Quantencomputersystems (QUSYS) und eine Quantencomputerüberwachungsvorrichtung (QUV) eines Quantencomputers (QC) offen, wobei die Übergänge offensichtlich fließend sind. Ein Quantencomputersystem (QUSYS) kann somit beispielsweise eine Quantencomputerüberwachungsvorrichtung (QUV) des Quantencomputersystems (QUSYS) und/oder ein oder mehrere Quantencomputer (QC1 bis QC16) mit beispielsweise jeweils einer oder mehrerer Quantencomputerüberwachungsvorrichtungen (QUV) dieser Quantencomputer (QC) umfassen.

### Bezugszeichenliste

- AB: vorbestimmter, besonders geschützter Adressbereich innerhalb des Speichers (MEM) des Quantencomputers (QC);
- BPL: Bypass-Leitung;
- DB: Datenbus;
- GR: Gerät, das durch den Quantencomputer (QC) gesteuert oder geregelt wird;
- GSTL: Gerätsteuerleitungen, über die der Quantencomputer (QC) das Gerät (GR) steuert oder regelt. Bevorzugt umfassen die Gerätsteuerleitungen Leitungen, die Steuerbefehle und/oder Steuersignale vom Quantencomputer (QC) an das Gerät (GR) übertragen, und/oder Leitungen, die Daten und/oder Messwertsignale vom gerät (GR) an den Quantencomputer (QC) übertragen. Gerätesteuerleitungen können auch bidirektional und/oder analog und/oder digital und/oder differentiell und/oder mit spannungsgesteuerter und/oder stromgesteuerter Signalisierung sein.
- ICLK: interner Taktgenerator der Quantencomputerüberwachungsvorrichtung (QUV);
- iCLK: interner Takt der Quantencomputerüberwachungsvorrichtung (QUV). Der interne Taktgenerator der Quantencomputerüberwachungsvorrichtung (QUV) erzeugt den interner Takt der Quantencomputerüberwachungsvorrichtung (QUV), der die Logikteile der Quantencomputerüberwachungsvorrichtung (QUV) bevorzugt antreibt;
- iCNTS: internes Zählereignissignal;
- INTR: Interruptleitung;
- ITR: Signalisierungsleitung der Quantencomputerüberwachungsvorrichtung (QUV). Mit dieser Signalisierungsleitung signalisiert die Quantencomputerüberwachungsvorrichtung bevorzugt der Zentralen Steuereinheit (ZSE), dass ein Zurücksetzen des Quantencomputersystems (QUSYS) oder einzelner oder mehrerer Quantencomputer (QC1 bis QC16) des Quantencomputersystems (QUSYS) erforderlich ist. Im einfachsten Fall handelt es sich um eine Reset- oder Interrupt-Leitung des Rechners der zentralen Steuereinheit (ZSE). Bei der Signalisierungsleitung kann es sich um einen Datenbus oder dergleichen handeln über den die Quantencomputerüberwachungsvorrichtung (QUV) der zentralen Steuereinrichtung (ZSE) Stati des Quantencomputersystems (QUSYS) übermitteln kann und/oder Maßnahmen zur Eindämmung, Beseitigung oder Blockade von Fehlern des Quantencomputersystems (QUSYS) anfordern kann;
- µC: Steuerrechner des Quantencomputers (QC);
- µC1: erster Steuerrechner des ersten Quantencomputers (QC1);
- pC2: zweiter Steuerrechner des zweiten Quantencomputers (QC2);
- pC3: dritter Steuerrechner des dritten Quantencomputers (QC3);
- pC4: vierter Steuerrechner des vierten Quantencomputers (QC4);
- µC5: fünfter Steuerrechner des fünften Quantencomputers (QC5);
- µC6: sechster Steuerrechner des sechsten Quantencomputers (QC6);
- µC7: siebter Steuerrechner des siebten Quantencomputers (QC7);
- µC8: achter Steuerrechner des achten Quantencomputers (QC8);
- µC9: neunter Steuerrechner des neunten Quantencomputers (QC9);
- µC10: zehnter Steuerrechner des zehnten Quantencomputers (QC10);
- µC11: elfter Steuerrechner des elften Quantencomputers (QC11);
- µC12: zwölfter Steuerrechner des zwölften Quantencomputers (QC12);
- µC13: dreizehnter Steuerrechner des dreizehnten Quantencomputers (QC13);
- µC14: vierzehnter Steuerrechner des vierzehnten Quantencomputers (QC14);
- µC15: fünfzehnter Steuerrechner des fünfzehnten Quantencomputers (QC15);
- µC16: sechzehnter Steuerrechner des sechzehnten Quantencomputers (QC16);
- µCQUV: Steuerrechner der Quantencomputerüberwachungsvorrichtung (QUV). Sofern die Quantencomputerüberwachungsvorrichtung (QUV) selbst ein Quantencomputer (QC) ist, kann es sich um den Steuerrechner (µC) dieses Quantencomputers handeln;
- M1: erste Mittel des Quantencomputers (QC) zur Manipulation der Quantenbits (QUB) des Quantencomputers (QC). Bevorzugt steuert der Steuerrechner (µC) des Quantencomputers (QC) die ersten Mittel und liest deren Betriebszustandswerte über den Datenbus (QCDB) des Quantencomputers (QC) aus;
- M2: zweite Mittel des Quantencomputers (QC) zum Auslesen der Quantenzustände der Quantenbits (QUB) des Quantencomputers (QC). Bevorzugt steuert der Steuerrechner (µC) des Quantencomputers (QC) die zweiten Mittel und liest deren Betriebszustandswerte und Messwerte und die ermittelten Quantenzustandswerte der Quantenbits (QUB) über den Datenbus (QCDB) des Quantencomputers (QC) aus;
- MEM: Speicher des Steuerrechners (µC) des Quantencomputers (QC);
- NVM: nicht flüchtiger Speicher;
- QC: Quantencomputer. Es kann sich um einen Quantencomputer der Quantencomputer (QC1 bis QC16) des Quantencomputersystems (QSYS) handeln. Bevorzugt handelt es sich um einen Quantencomputer mit paramagnetischen Zentren als Quantenbits des Quantencomputers. Bevorzugt umfassen diese paramagnetischen Zentren NV-Zentren und/oder SiV-Zentren und/oder TR1-Zentren und/oder L1-Zentren und/oder TiV-Zentren und/oder GeV-Zentren und/oder SnV-Zentren und/oder NiN₄-Zentren und/oder PbV-Zentren und/oder ST1-Zentren etc. NV-Zentren. Ganz besonders bevorzugt mfassen diese paramagnetischen Zentren im Wesentlichen NV-Zentren. Bevorzugt ist der Quantencomputer ein Raumtemperatur Quantencomputer ohne Kühlung für den Betrieb bei einer Umgebungstemperatur oberhalb von 0°C.;
- QC1: erster Quantencomputer des beispielhaften Quantencomputersystems (QSYS);
- QC2: zweiter Quantencomputer des beispielhaften Quantencomputersystems (QSYS);
- QC3: dritter Quantencomputer des beispielhaften Quantencomputersystems (QSYS);
- QC4: vierter Quantencomputer des beispielhaften Quantencomputersystems (QSYS);
- QC5: fünfter Quantencomputer des beispielhaften Quantencomputersystems (QSYS);
- QC6: sechster Quantencomputer des beispielhaften Quantencomputersystems (QSYS);
- QC7: siebter Quantencomputer des beispielhaften Quantencomputersystems (QSYS);
- QC8: achter Quantencomputer des beispielhaften Quantencomputersystems (QSYS);
- QC9: neunter Quantencomputer des beispielhaften Quantencomputersystems (QSYS);
- QC10: zehnter Quantencomputer des beispielhaften Quantencomputersystems (QSYS);
- QC11: elfter Quantencomputer des beispielhaften Quantencomputersystems (QSYS);
- QC12: zwölfter Quantencomputer des beispielhaften Quantencomputersystems (QSYS);
- QC13: dreizehnter Quantencomputer des beispielhaften Quantencomputersystems (QSYS);
- QC14: vierzehnter Quantencomputer des beispielhaften Quantencomputersystems (QSYS);
- QC15: fünfzehnter Quantencomputer des beispielhaften Quantencomputersystems (QSYS);
- QC16: sechzehnter Quantencomputer des beispielhaften Quantencomputersystems (QSYS);
- QCDB: interner Datenbus des Quantencomputers (QC);
- QUB: Quantenbits;
- QUP: besonders geschützte Quantenbits (QUB) unter den Quantenbits (QUB) des Quantencomputers (QC). Ein Quantencomputer (QC) braucht nicht immer besonders geschützte Quantenbits aufweisen. Bevorzugt schützt der Steuerrechner (µC) oder ein anderer berechtigter Rechner solche besonders geschützte Quantenbits durch setzen eines oder mehrere Flags oder dergleichen Information, die sich bevorzugt in der Quantencomputerüberwachungsvorrichtung (QUV) befinden. Vor einer gewünschten Manipulation besonders geschützter Quantenbits löscht der Steuerrechner (µC) des Quantencomputers (µC) oder ein anderer berechtigter Rechner diese Flags. Nach der Quantencomputerberechnung, die diese besonders geschützten Quantenbits (QUP) nutzt, setzt der der Steuerrechner (µC) des Quantencomputers (µC) oder ein anderer berechtigter Rechner bevorzugt wieder diese Flags und stellt den Schutz so wieder her. Bevorzugt erfordert die Veränderung dieser Flags eine Passwort Übermittlung in ein Register, dass die Veränderung der Flags erlaubt, wenn das Passwort im Register mit einem vorbestimmten Wert übereinstimmt;
- QUSYS: Quantencomputersystem;
- QUV: Quantencomputerüberwachungsvorrichtung. Die Quantencomputerüberwachungsvorrichtung kann als Teil eines Quantencomputersystems (QUSYS) die Zentrale Steuereinheit (ZSE) und die Quantencomputer (QC1 bis QC16) des Quantencomputersystems (QUSYS) überwachen und/oder als Teil eines Quantencomputers (QC) den Steuerrechner (µC) des Quantencomputers (QC) und andere Teilvorrichtungen des Quantencomputers (QC) überwachen. Zu diesen Teilvorrichtungen gehören bevorzugt die Quantenbits und deren Ansteuer- und Auslesevorrichtungen und Vorrichtungen zur Manipulation der Quantenbits das Quantencomputers (QC) etc.
- RAM: Schreib-/Lesespeicher des Steuerrechners (µC) des Quantencomputers (QC);
- SdT: Stand der Technik;
- SYSC: Systemkomponente;
- SYSCDB: beispielhafte weitere Signalleitungen, die einen Datenbusumfassen können;
- TERM: Terminal. Das Terminal dient im Beispiel der Figur 4 als zentrale Steuereinheit (ZSE);
- ZSE: zentrale Steuereinheit des Quantencomputersystems (QUSYS);

## Patentansprüche

1. Quantencomputersystem (QUSYS)
- wobei das Quantencomputersystem (QUSYS) einen Quantencomputer (QC) umfasst und
- wobei der Quantencomputer (QC) einen Steuerrechner (µC) umfasst und
- wobei der Quantencomputer (QC) ein oder mehrere Quantenbits (QUB, QUP) umfasst und
- wobei der Quantencomputer (QC) erste Mittel (M1) umfasst, die dazu eingerichtet sind,
- eine Überlagerung von Quantenzuständen eines oder mehrerer Quantenbits (QUB, QUP) des Quantencomputers (QC) herzustellen und/oder zu manipulieren und/oder
- einen vorbestimmten Quantenzustand eines oder mehrerer Quantenbits (QUB, QUP) des Quantencomputers (QC) einzustellen und/oder
- eine vorbestimmte Überlagerung mehrerer vorbestimmter Quantenzustände eines oder mehrerer Quantenbits (QUB, QUP) des Quantencomputers (QC) einzustellen und/oder
- eine vorbestimmte Verschränkung mehrerer vorbestimmter Quantenzustände eines oder mehrerer Quantenbits (QUB, QUP) des Quantencomputers (QC) einzustellen, und
- wobei der Quantencomputer zweite Mittel (M2) umfasst, die dazu eingerichtet sind, um einen Quantenzustand eines oder mehrerer Quantenbits (QUB, QUP) des Quantencomputers (QC) zu ermitteln und/oder auszulesen, und
- wobei das Quantencomputersystem (QUSYS) zusätzlich zu dem Steuerrechner (µC) des Quantencomputers (QC) eine Quantencomputerüberwachungsvorrichtung (QUV) umfasst, die dazu eingerichtet ist, den Quantencomputer (QC) zu überwachen, und
- wobei die Quantencomputerüberwachungsvorrichtung (QUV) dazu eingerichtet ist, eine Überwachung auf eine Fehlfunktion von Quantencomputersystem-Bestandteilen vorzunehmen, und
- wobei der Quantencomputer (QC) dazu eingerichtet ist, ein Quantencomputerprogramm mit einem Quantencomputerprogrammablauf auszuführen, und
- wobei die Quantencomputerüberwachungsvorrichtung (QUV) dazu eingerichtet ist, den korrekten Quantencomputerprogrammablauf des Quantencomputerprogramms des Quantencomputers (QC) zu überwachen, und
- wobei die Quantencomputerüberwachungsvorrichtung (QUV) Mittel (µCQUV, ICNT, ICLK) zur Überwachung des korrekten Quantencomputerprogrammablaufs des Quantencomputerprogramms des Quantencomputers (QC) umfasst,
- wobei die Überwachung eines korrekten Programmablaufs die Verhinderung unerlaubter und ggf. gefährlicher Zustände von Systemen (GR, ZSE), die der Quantencomputer (QC) steuert, bedeutet und
- wobei die Quantencomputerüberwachungsvorrichtung (QUV) zur Verhinderung unerlaubter und ggf. gefährlicher Zustände dieser Systeme (GR, ZSE), die der Quantencomputer (QC) steuert, eingerichtet ist und
- wobei die Überwachung des korrekten Programmablaufs bedeutet, dass Quantencomputerüberwachungsvorrichtung (QUV) dazu eingerichtet ist, Fehler des Quantencomputers (QC), die während des Betriebs auftauchen, zu erkennen,
- wobei diese zu erkennenden Fehler Hard- und/oder Software-Defekte und/oder Fehlfunktionen des Quantencomputers (QC) umfassen, und
- wobei A) die Quantencomputerüberwachungsvorrichtung (QUV) dazu eingerichtet ist, im Falle des Schließens auf einen Fehler durch die Quantencomputerüberwachungsvorrichtung (QUV)
i. ein an den Quantencomputer (QC) angeschlossenes Gerät (GR)
a. in seiner Funktion für eine vorgegebene Zeitdauer zu sperren oder
b. in einen sicheren Zustand zu bringen oder
c. den Zugriff des Quantencomputers (QC) auf das Gerät (GR) zu verhindern oder
d. das Gerät (GR) statt mit dem Quantencomputer (QC) mit einer Quantencomputersimulationsvorrichtung zu verbinden und/oder
ii. dem Quantencomputer (QC) oder einem übergeordneten System (ZSE) das Auftreten dieses Fehlers zu signalisieren oder eine Information über diesen Fehler bereitzuhalten und wobei diese Signalisierung der Quantencomputerüberwachungsvorrichtung (QUV) die Folge hat, dass diese Signalisierung
e. den Quantencomputer (QC) zurücksetzt und/oder
f. den Quantencomputer (QC) in einen vorbestimmten Zustand bringt und/oder
g. zumindest ein Quantenbit (QUB) des Quantencomputers (QC) in einen vorbestimmten Zustand bringt und/oder
h. zumindest ein Kernquantenbit (QUB) des Quantencomputers (QC) in einen vorbestimmten Zustand bringt und/oder.
i. zumindest ein Quantenregister (QUREG) des Quantencomputers (QC) in einen vorbestimmten Zustand bringt und/oder
j. zumindest ein Kernquantenregister (CQUREG) des Quantencomputers (QC) in einen vorbestimmten Zustand bringt und/oder
k. zumindest ein Kern-Elektron-Quantenregister (CEQUREG) des Quantencomputers (QC) in einen vorbestimmten Zustand bringt und/oder
- wobei B) die Quantencomputerüberwachungsvorrichtung (QUV) dazu eingerichtet ist, wenn sie auf einen Fehler oder fehlerhaften Zustand des Quantencomputers (QC) schließt, eine oder mehrere der folgenden Gegenmaßnahmen durchzuführen:
i. Durchführung vorbestimmter Quantencomputerberechnungen zum Test des Quantencomputers (QC) und/oder
ii. Stilllegung des betreffenden Quantencomputers (QC) und/oder
iii. Ersatz des Quantencomputers (QC) durch eine Quantencomputersimulationsvorrichtung zur Gewährleistung eines Notlaufs und/oder
iv. um eine Signalisierung eine Fehlers an eine übergeordnete Einheit und/oder einen Nutzer und/oder
v. Versetzung des Quantencomputersystems (QUSYS) in einen Notlaufzustand.

2. Quantencomputersystem (QUSYS) nach Anspruch 1
- wobei die Quantencomputerüberwachungsvorrichtung (QUV) dazu eingerichtet ist, zumindest den Wert und/oder Werteverlauf eines der folgenden Betriebsparameter zu überwachen und hierzu zu erfassen:
- einen Wert einer Betriebsspannung einer Betriebsspannungsleitung (VDD) des Quantencomputersystems (QUSYS) gegenüber einem Bezugspotenzial (GND) und/oder
- einen Wert einer dieser Betriebsspannungsleitung (VDD) zugeordneten Stromaufnahme (IDD) des Quantencomputersystems (QUSYS) und/oder
- einen Wert einer Betriebsspannung einer Betriebsspannungsleitung (VDD) des Quantencomputers (QC) gegenüber einem Bezugspotenzial (GND) und/oder
- einen Wert einer dieser Betriebsspannung zugeordneten Stromaufnahme (IDD) des Quantencomputers (QC) und/oder
- einen Wert einer Betriebsspannung eines Vorrichtungsteils des Quantencomputers (QC) gegenüber einem Bezugspotenzial (GND) und/oder
- einen Wert einer Betriebsspannung zugeordneten Stromaufnahme eines Vorrichtungsteils des Quantencomputers (QC) und/oder
- den Prozessortakt (QCCLK) eines Steuerrechners (µC), der ggf. Teil des Quantencomputers (QC) ist, und/oder
- den Wert der Frequenz des Prozessortakts (QCCLK) des Steuerrechners (µC), der ggf. Teil des Quantencomputers (QC) ist, und/oder
- die Lichtabgabe einer Lichtquelle (LED) eines Quantencomputers (QC) zum Bestrahlen von Quantenbits (QUB) des Quantencomputers (QC) mit Strahlung und/oder
- die Detektionsfähigkeit von elektromagnetischer Strahlung eines Fotodetektors und/oder
- die bestimmungsgemäß korrekte Erzeugung elektromagnetischer Felder, insbesondere von Mikrowellenfeldern und/oder Radiowellenfeldern eine Vorrichtung des Quantencomputers (QC) zur Manipulation eines oder mehrerer Quantenbits (QUB) und/oder
- den komplexen und/oder realen und/oder imaginären Leitwert einer Leitung, die Teil einer Vorrichtung des Quantencomputers (QC) zur Manipulation eines oder mehrerer Quantenbits (QUB) ist, und
- wobei die Quantencomputerüberwachungsvorrichtung (QUV) dazu eingerichtet ist, Messwerte für die überwachten Betriebsparameter zu ermitteln, und
- wobei die Quantencomputerüberwachungsvorrichtung (QUV) dazu eingerichtet ist, diese Messwerte mit Schwellwerten und/oder vorgegebenen Toleranzintervallen für diese Messwerte dieser Betriebsparameter zu vergleichen, und
- wobei die Quantencomputerüberwachungsvorrichtung (QUV) dazu eingerichtet ist, wenn die Messwerte außerhalb der Wertebereiche liegen, die durch die Schwellwerte und/oder die vorgegebenen Toleranzintervalle als zulässig markiert sind, Gegenmaßnahmen zu initiieren.

3. Quantencomputersystem (QUSYS) nach Anspruch 1 oder 2,
- wobei das Quantencomputersystem mindestens zwei Quantencomputer,
- den Quantencomputer (QC), nun als erster Quantencomputer (QC1) bezeichnet, und
- einen zweiten Quantencomputer (QC2), umfasst und
- wobei über mindestens eine Signalverbindung (DB) von dem ersten Quantencomputer (QC1) eine Signalisierung, eines Quantencomputerberechnungsergebnisses, an den zweiten Quantencomputer (QC2) erfolgen kann und
- wobei der zweite Quantencomputer (QC2) dazu eingerichtet ist, zumindest zeitweise als Quantencomputerüberwachungsvorrichtung (QUV) des ersten Quantencomputers (QC1) zu arbeiten, und
- wobei der zweite Quantencomputer (QC2) dazu eingerichtet ist, auf einen Fehlerzustand des ersten Quantencomputers (QC1) zu schließen, wenn das Quantencomputerberechnungsergebnis des ersten Quantencomputers (QC1) nicht innerhalb der vorbestimmten erlaubten Lösungsmenge für das das Quantencomputerberechnungsergebnis des ersten Quantencomputers (QC1) liegt, und
- wobei der zweite Quantencomputer (QC2) dazu eingerichtet ist, im Falle des Schließens auf einen Fehler dem ersten Quantencomputer (QC1) oder einem übergeordneten System (ZSE) das Auftreten dieses Fehlers zu signalisieren und/oder eine Information über diesen Fehler bereitzuhalten.

4. Quantencomputersystem (QUSYS) nach Anspruch 3
- wobei das Quantencomputersystem (QUSYS) mehr als genau eine Messeinrichtungen zur Erfassung von Betriebsgrößen des Quantencomputersystems (QUSYS) und/oder zur Erfassung von Betriebsgrößen einer Vorrichtung oder und/oder zur Erfassung von Betriebsgrößen eines Systems umfasst und
- wobei ggf. die Zustände dieser Vorrichtung von dem Quantencomputersystem (QUSYS) abhängen bzw. wobei ggf. die Zustände dieses Systems von dem Quantencomputersystem (QUSYS) abhängen und
- wobei der erste Quantencomputer (QC1) eine erste Quantencomputerberechnung durchführt und
- wobei der zweite Quantencomputer (QC2) diese erste Quantencomputerberechnung zumindest zeitweise und/oder zeitversetzt ebenfalls durchführt und
- wobei die erste Quantencomputerberechnung bei Ausführung durch den ersten Quantencomputer (QC1) eine Überwachungsmaßnahme zur Überprüfung der Funktionsfähigkeit des ersten Quantencomputers (QC1) umfasst und
- wobei die erste Quantencomputerberechnung bei Ausführung durch den zweiten Quantencomputer (QC2) eine Überwachungsmaßnahme zur Überprüfung der Funktionsfähigkeit des zweiten Quantencomputers (QC2) umfasst und
- wobei der erste Quantencomputer (QC1) die Quantencomputerberechnung des ersten Quantencomputers (QC1) unabhängig von der Quantencomputerberechnung des zweiten Quantencomputers (QC2) durchführt und
- wobei der Erwartungswert das Quantencomputerberechnungsergebnis der Quantencomputerberechnung des zweiten Quantencomputers (QC2) ist und
- wobei der zweite Quantencomputer (QC2) dazu eingerichtet ist, zumindest zeitweise als Quantencomputerüberwachungsvorrichtung (QUV) des ersten Quantencomputers (QC1) zu arbeiten, und
- wobei der zweite Quantencomputers (QC2) dazu eingerichtet ist, mehrmals die vorbestimmte Quantencomputerberechnung durch den ersten Quantencomputer (QC1) durchführen lassen und die jeweilige Häufigkeit der erwarteten Quantencomputerberechnungsergebnisse mit jeweiligen Erwartungswerten für die tatsächlich vom ersten Quantencomputer (QC1) an den zweiten Quantencomputers (QC2) übermittelten Quantencomputerberechnungsergebnisse zu vergleichen, und
- wobei der zweite Quantencomputers (QC2) dazu eingerichtet ist, auf einen Fehler zu schließen, wenn diese jeweilige Häufigkeit der tatsächlich vom ersten Quantencomputer (QC1) an den zweiten Quantencomputers (QC2) übermittelten Quantencomputerberechnungsergebnisse von den jeweiligen Erwartungswerten für die jeweilige Häufigkeit der erwarteten Quantencomputerberechnungsergebnisse bei einem oder mehreren Erwartungswerten um mehr als eine jeweilige Erwartungswertabweichungstoleranz abweicht.

5. Quantencomputersystem (QUSYS) nach einem der Ansprüche 1 bis 2
- wobei der Quantencomputer (QC)
- - Quantenbits und
- - einen Steuerrechner (µC) und
- - erste Mittel zur Manipulation von Quantenbits des Quantencomputers (QC) und
- - zweite Mittel zum Auslesen des Zustands von Quantenbits des Quantencomputers (QC) umfasst und
- wobei die ersten Mittel zur Manipulation von Quantenbits des Quantencomputers (QC) durch den Steuerrechner (µC) gesteuert werden und
- wobei die zweiten Mittel zum Auslesen des Zustands von Quantenbits des Quantencomputers (QC) durch den Steuerrechner (µC) gesteuert werden und
- wobei die Quantencomputerüberwachungsvorrichtung (QUV) über Mittel zur Beobachtung des Quantencomputerprogrammablaufs eines auf dem Steuerrechner (µC) des Quantencomputers (QC) ablauffähigen Quantencomputerprogramms umfasst und
- wobei die Quantencomputerüberwachungsvorrichtung (QUV) diesen Quantencomputerprogrammablaufs des auf mindestens dem Steuerrechner (µC) des Quantencomputers (QC) ablauffähigen Quantencomputerprogramms überwacht und
- wobei die Quantencomputerüberwachungsvorrichtung (QUV)
- bei einer Manipulation einer Teilmenge der Quantenbits der Quantenbits des Quantencomputers (QC) während der Quantencomputerprogrammlaufzeit eine Ausnahmebedingung (Exception), in Form einer Unterbrechung (Interrupt) des Quantencomputerprogrammablaufs oder einer anderen Maßnahmen in Abhängigkeit von der Art der erfüllten Ausnahmebedingung, auslöst.

6. Quantencomputersystem (QUSYS) nach einem der Ansprüche 1 bis 5
- wobei der Quantencomputer (QC) ein Read-Only-Memory oder ein Flash-Memory oder einen anderen, nicht flüchtigen Speicher(NVM), umfasst und,
- wobei auf dem Read-Only-Memory oder dem Flash-Memory oder dem anderen, nicht flüchtigen Speicher (NVM) ein Quantencomputerprogramm abgespeichert ist, das auf mindestens dem Steuerrechner (µC) des Quantencomputers (QC) ablauffähig ist.

7. Quantencomputersystem (QUSYS) nach einem der Ansprüche 1 bis 6,
- wobei das Quantencomputersystem (QUSYS) einen Quantencomputer (QC) umfasst, der mindestens einen Steuerrechner (µC) und die Quantencomputerüberwachungsvorrichtung (QUV) aufweist,
- wobei auf dem mindestens einen Steuerrechner (µC) ein Quantencomputerprogramm ablauffähig ist und
- wobei die Quantencomputerüberwachungsvorrichtung (QUV) während der Quantencomputerprogrammlaufzeit den Ablauf des Quantencomputerprogramms überwacht und beim Zugriff auf einen bestimmten Adressbereich (AB) innerhalb eines Speichers (MEM) des Quantencomputers (QC) eine Ausnahmebedingung (Exception), insbesondere eine Unterbrechung (Interrupt) des Quantencomputerprogrammablaufs, auslöst, wobei der Quantencomputer (QC) Mittel zum Durchlaufen einer Ausnahmebedingungs-Routine (Exception-Routine) nach dem Auslösen einer Ausnahmebedingung während der Quantencomputerprogrammlaufzeit aufweist, wobei diese Mittel eine Reset-Logik und/oder eine Interrupt-Logik des Steuerrechners (µC) umfassen, die den Programm-Pointer und/oder Stack-Pointer des Steuerrechners (µC) dann auf vorbestimmte Werte setzten.

8. Verfahren zum Betrieb eines Quantencomputersystems (QUSYS),
- wobei das Quantencomputersystem (QUSYS) einen Quantencomputer (QC) umfasst und
vi. - wobei der der Quantencomputer (QC) einen Steuerrechner (µC) umfasst und
vii. - wobei der der Quantencomputer (QC) ein oder mehrere Quantenbits (QUB, QUP) umfasst und
viii. - wobei der Quantencomputer (QC) erste Mittel (M1) umfasst, die dazu eingerichtet sind,
l. eine Überlagerung von Quantenzuständen eines oder mehrerer Quantenbits (QUB, QUP) des Quantencomputers (QC) herzustellen und/oder zu manipulieren und/oder
m. einen vorbestimmten Quantenzustand eines oder mehrerer Quantenbits (QUB, QUP) des Quantencomputers (QC) einzustellen und/oder
n. eine vorbestimmte Überlagerung mehrerer vorbestimmter Quantenzustände eines oder mehrerer Quantenbits (QUB, QUP) des Quantencomputers (QC) einzustellen und/oder
o. eine vorbestimmte Verschränkung mehrerer vorbestimmter Quantenzustände eines oder mehrerer Quantenbits (QUB, QUP) des Quantencomputers (QC) einzustellen, und
ix. - wobei der Quantencomputer zweite Mittel (M2) umfasst, die dazu eingerichtet sind, um einen Quantenzustand eines oder mehrerer Quantenbits (QUB, QUP) des Quantencomputers (QC) zu ermitteln und/oder auszulesen, und
- wobei das Quantencomputersystem (QUSYS) zusätzlich zu dem Steuerrechner (µC) des Quantencomputers (QC) eine Quantencomputerüberwachungsvorrichtung (QUV) umfasst, die dazu eingerichtet ist, den Quantencomputer (QC) zu überwachen, und
- wobei die Quantencomputerüberwachungsvorrichtung (QUV) dazu eingerichtet ist, eine Überwachung auf eine Fehlfunktion von Quantencomputersystem-Bestandteilen vorzunehmen, und
- wobei der Quantencomputer (QC) dazu eingerichtet ist, ein Quantencomputerprogramm mit einem Quantencomputerprogrammablauf auszuführen, und
- wobei die Quantencomputerüberwachungsvorrichtung (QUV) dazu eingerichtet ist, den korrekten Quantencomputerprogrammablauf des Quantencomputerprogramms des Quantencomputers (QC) zu überwachen, und
- wobei die Quantencomputerüberwachungsvorrichtung (QUV) Mittel (µCQUV, ICNT, ICLK) zur Überwachung des korrekten Quantencomputerprogrammablaufs des Quantencomputerprogramms des Quantencomputers (QC) umfasst, und
- wobei die Quantencomputerüberwachungsvorrichtung (QUV) zur Verhinderung unerlaubter und ggf. gefährlicher Zustände dieser Systeme (GR, ZSE), die der Quantencomputer (QC) steuert, eingerichtet ist,
mit den Schritten
- Überwachen des korrekten Quantencomputerprogrammablaufs des Quantencomputerprogramms des Quantencomputers (QC) durch die Quantencomputerüberwachungsvorrichtung (QUV),
- wobei die Überwachung eines korrekten Programmablaufs die Verhinderung unerlaubter und ggf. gefährlicher Zustände von Systemen, die von dem Quantencomputer gesteuert werden, bedeutet und
- wobei die Überwachung eines korrekten Programmablaufs auch bedeutet, dass Fehler in den Quantensystemen des Quantencomputers, die während des Betriebs auftauchen können, erkannt werden, und
- wobei diese zu erkennenden Fehler Hard- und/oder Software-Defekte und/oder Fehlfunktionen des Quantencomputers (QC) umfassen, und
- Durchführen vorbestimmter Quantencomputerberechnungen mit mindestens einer Quantenoperation zur Berechnung vorbestimmter Quantencomputerberechnungsergebnisse in vorbestimmten Zeiträumen vor vorbestimmten Zeitpunkten, durch den Quantencomputer (QC), und
- Ansteuern der Quantencomputerüberwachungsvorrichtung (QUV) nach diesen vorbestimmten Zeitpunkten und Durchführung eines Rücksetzens (Reset-Funktion) des Quantencomputers (QC) auf einen vorgegebenen oder voreingestellten Quantencomputerprogrammstartzustand oder dergleichen, wenn diese Ansteuerung der Quantencomputerüberwachungsvorrichtung (QUV) nicht in vorbestimmter Weise erfolgt.

## Claims

1. Quantum computer system (QUSYS)
- wherein the quantum computer system (QUSYS) comprises a quantum computer (QC) and
- wherein the quantum computer (QC) comprises a control computer (µC) and
- wherein the quantum computer (QC) comprises one or more qubits (QUB, QUP) and
- wherein the quantum computer (QC) comprises first means (M1) configured so,
- establish and/or manipulate a superposition of quantum states of one or more quantum bits (QUB, QUP) of the quantum computer (QC)
- to set a predetermined quantum state of one or more quantum bits (QUB, QUP) of the quantum computer (QC) and/or
- to set a predetermined superposition of several predetermined quantum states of one or more quantum bits (QUB, QUP) of the quantum computer (QC) and/or
- setting a predetermined entanglement of several predetermined quantum states of one or more quantum bits (QUB, QUP) of the quantum computer (QC), and
- wherein the quantum computer comprises second means (M2) configured so as to determine and/or read a quantum state of one or more quantum states (QUB, QUP) of the quantum computer (QC) , and
- wherein the quantum computer system (QUSYS) comprises, in addition to the control computer (µC) of the quantum computer (QC), a quantum computer monitoring apparatus (QUV) , configured so as to monitor the quantum computer (QC), and
- wherein the quantum computer monitoring apparatus (QUV) is configured so as to carry out monitoring for malfunction of quantum computer system components, and
- wherein the quantum computer (QC) is configured so as to execute a quantum computer program with a quantum computer program sequence, and
- wherein the quantum computer monitoring apparatus (QUV) is configured so as to monitor the correct quantum computer program sequence of the quantum computer program of the quantum computer (QC), and
- wherein the quantum computer monitoring apparatus (QUV) comprises means (µCQUV, ICNT, ICLK) for monitoring the correct quantum computer program sequence of the quantum computer program of the quantum computer (QC),
- wherein the monitoring of a correct program sequence means the prevention of unauthorized and possibly hazardous states of systems (GR, ZSE) controlled by the quantum computer (QC) and
- wherein the quantum computer monitoring apparatus (QUV) is arranged for the prevention of unauthorized and possibly hazardous states of said systems (GR, ZSE) controlled by the quantum computer (QC), and
- wherein monitoring the correct program sequence means that quantum computer monitoring apparatus (QUV) is configured so as to be detected errors of the quantum computer (QC) arising during operation,
- wherein these errors to be detected comprise hardware and/or software defects and/or malfunctions of the quantum computer (QC), and
- wherein A) the quantum computer monitoring apparatus (QUV) is configured so as to, in the event of an error being inferred by the quantum computer monitoring apparatus (QUV):
i. block the function of a device (GR) connected to the quantum computer (QC)
a. for a predetermined period of time or
b. to bring it into a safe state or
c. prevent the quantum computer (QC) from gaining access to the device (GR) or
d. to connect the device (GR) rather to the quantum computer (QC) to a quantum computer simulation apparatus and/or
i. signaling to the quantum computer (QC) or to a superordinate system (ZSE) the occurrence of this error or providing notification of this error and wherein this signaling to the quantum computer monitoring apparatus (QUV) has the effect that this signaling
e. resets the quantum computer (QC) and/or
f. brings the quantum computer (QC) into a predetermined state and/or
g. brings at least one qubit (QUB) of the quantum computer (QC) into a predetermined state and/or
h. brings at least one nuclear qubit (QUB) of the quantum computer (QC) into a predetermined state and/or.
i. brings at least one quantum register (QUREG) of the quantum computer (QC) into a predetermined state and/or
j. brings at least one nucleus quantum register (CQUREG) of the quantum computer (QC) into a predetermined state and/or
k. brings at least one nucleus electron quantum register (CEQUREG) of the quantum computer (QC) into a predetermined state and/or
- wherein B) the quantum computer monitoring apparatus (QUV) is configured so as to perform one or more of the following countermeasures when it infers an error or erroneous state of the quantum computer (QC):
i. Performing predetermined quantum computer calculations to test the quantum computer (QC) and/or
ii. Shutting down the relevant quantum computer (QC) and/or
iii. Replacing the quantum computer (QC) with a quantum computer simulation apparatus to ensure fail-safe operation and/or
iv. for signaling an error to a superordinate unit and/or a user and/or
v. Putting the quantum computer system (QUSYS) into a fail-safe state .

2. Quantum computer system (QUSYS) according to claim 1
- wherein the quantum computer monitoring apparatus (QUV) is configured so as to monitor and capture at least the value and/or value progression of one of the following operating parameters:
- a value of an operating voltage of an operating voltage line (VDD) of the quantum computer system (QUSYS) with respect to a reference potential (GND) and/or
- a value of a current consumption (IDD) of the quantum computer system (QUSYS) assigned to this operating voltage line (VDD) and/or
- a value of an operating voltage of an operating voltage line (VDD) of the quantum computer (QC) with respect to a reference potential (GND) and/or
- a value of a current consumption (IDD) of the quantum computer (QC) assigned to this operating voltage and/or
- a value of an operating voltage of a device part of the quantum computer (QC) with respect to a reference potential (GND) and/or
- a value of a current consumption of a device part of the quantum computer (QC) associated with an operating voltage and/or
- the processor clock (QCCLK) of a control computer (µC), which may be part of the quantum computer (QC), and/or
- the value of the frequency of the processor clock (QCCLK) of the control computer (µC), which may be part of the quantum computer (QC), and/or
- the light output of a light source (LED) of a quantum computer (QC) for irradiating qubits (QUB) of the quantum computer (QC) with radiation and/or
- the electromagnetic radiation detection capability of a photodetector and/or
- the generation of electromagnetic fields, in particular microwave fields and/or radio wave fields, correct according to the intended use a device of the quantum computer (QC) for manipulating one or more qubits (QUB)
- the complex and/or real and/or imaginary conductance of a line which is part of a device of the quantum computer (QC) for manipulating one or more qubits (QUB), and
- wherein the quantum computer monitoring apparatus (QUV) is configured so as to determine measurement values for the monitored operating parameters, and
- wherein the quantum computer monitoring apparatus (QUV) is configured so as to compare these measurement values with threshold values and/or predetermined tolerance intervals for these measurement values of these operating parameters, and
- wherein the quantum computer monitoring apparatus (QUV) is configured so that if the measurement values are outside the value ranges marked as allowable by the threshold values and/or the predetermined tolerance intervals, countermeasures are initiated.

3. Quantum computer system (QUSYS) according to claim 1 or 2,
- wherein the quantum computer system at least two quantum computers,
- the quantum computer (QC), now referred to as the first quantum computer (QC1), and
- comprising a second quantum computer (QC2), and
- wherein at least one signal connection (DB) from the first quantum computer (QC1) can be used for signaling a quantum computer calculation result to the second quantum computer (QC2), and
- wherein the second quantum computer (QC2) is configured so as to operate at least temporarily as a quantum computer monitoring apparatus (QUV) of the first quantum computer (QC1), and
- wherein the second quantum computer (QC2) is configured so as to infer a malfunction state of the first quantum computer (QC1) when the quantum computer calculation result of the first quantum computer (QC1) is not within the predetermined allowable solution set for the quantum computer calculation result of the first quantum computer (QC1), and
- wherein the second quantum computer (QC2) is configured so that, if an error is inferred, it signals the occurrence of this error to the first quantum computer (QC1) or a superordinate system (ZSE) and/or provides notification of this error.

4. Quantum computer system (QUSYS) according to claim 3
- wherein the quantum computer system (QUSYS) comprises more than exactly one measuring device for capturing operating parameters of the quantum computer system (QUSYS) and/or for capturing operating parameters of a device or and/or for capturing operating parameters of a system, and
-- wherein if applicable, the states of this device depend on the quantum computer system (QUSYS) or wherein, if applicable, the states of this system depend on the quantum computer system (QUSYS) and
- wherein the first quantum computer (QC1) performs an initial quantum computer calculation and
- wherein the second quantum computer (QC2) also performs this first quantum computer calculation at least temporarily and/or time-delayed and
- wherein the first quantum computer calculation, when executed by the first quantum computer (QC1), comprises a monitoring measure for checking the functionality of the first quantum computer (QC1), and
- wherein the first quantum computer calculation, when executed by the second quantum computer (QC2), comprises a monitoring measure for checking the functionality of the second quantum computer (QC2), and
- wherein the first quantum computer (QC1) performs the quantum computer calculation of the first quantum computer (QC1) independently of the quantum computer calculation of the second quantum computer (QC2), and
- wherein the expected value is the quantum computer calculation result of the quantum computer calculation of the second quantum computer (QC2) and
- wherein the second quantum computer (QC2) is configured so as to operate at least temporarily as a quantum computer monitoring apparatus (QUV) of the first quantum computer (QC1), and
- wherein the second quantum computer (QC2) is configured so as to have the first quantum computer (QC1) perform the predetermined quantum computer calculation several times and to compare the respective frequencies of the expected quantum computer calculation results with respective expected values for the quantum computer calculation results actually transmitted from the first quantum computer (QC1) to the second quantum computer (QC2), and
- wherein the second quantum computer (QC2) is configured so as to infer an error if this respective frequency of the quantum computer calculation results actually transmitted from the first quantum computer (QC1) to the second quantum computer (QC2) deviates from the respective expected values for the respective frequency of the expected quantum computer calculation results for one or more expected values by more than a respective expected value deviation tolerance .

5. Quantum computer system (QUSYS) according to any one of claims 1 to 2
- wherein the quantum computer (QC)
- -Qubits and
- -a control computer (µC) and
- -first means for manipulating qubits of the quantum computer (QC) and
- -second means for reading the state of quantum bits of the quantum computer (QC), and
- wherein the first means for manipulating qubits of the quantum computer (QC) are controlled by the control computer (µC) and
- wherein the second means for reading the state of qubits of the quantum computer (QC) are controlled by the control computer (µC) and
- wherein the quantum computer monitoring apparatus (QUV) comprises means for observing the quantum computer program sequence of a quantum computer program executable on the control computer (µC) of the quantum computer (QC), and
- wherein the quantum computer monitoring apparatus (QUV) monitors this quantum computer program sequence of the quantum computer program executable on at least the control computer (µC) of the quantum computer (QC), and
- wherein the quantum computer monitoring apparatus (QUV)
- triggers an exception condition (exception) in the form of an interrupt of the quantum computer program sequence or another measure depending on the type of exception condition met if a subset of the quantum bits of the quantum computer (QC) is manipulated during the quantum computer program sequence.

6. Quantum computer system (QUSYS) according to any one of claims 1 to 5
- wherein the quantum computer (QC) comprises a read-only memory or a flash memory or other non-volatile memory(NVM), and,
- wherein a quantum computer program is stored on the read-only memory or the flash memory or the other non-volatile memory (NVM), which is executable on at least the control computer (µC) of the quantum computer (QC).

7. The quantum computer system (QUSYS) according to any one of claims 1 to 6,
- wherein the quantum computer system (QUSYS) comprises a quantum computer (QC) having at least one control computer (µC) and the quantum computer monitoring apparatus (QUV),
- wherein a quantum computer program is executable on the at least one control computer (µC) and
- wherein the quantum computer monitoring apparatus (QUV) monitors the sequence of the quantum computer program during the quantum computer program runtime and triggers an exception condition (Exception), in particular an interrupt (Interrupt) of the quantum computer program sequence, upon access to a specific address range (AB) within a memory (MEM) of the quantum computer (QC),
- wherein the quantum computer (QC) has means for executing an exception condition routine after the triggering of an exception condition during the quantum computer program runtime,
- these means comprising a reset logic and/or an interrupt logic of the control computer (µC), which then set the program pointer and/or stack pointer of the control computer (µC) to predetermined values.

8. Method for operating a quantum computer system (QUSYS),
- wherein the quantum computer system (QUSYS) comprises a quantum computer (QC) and
vi. wherein the quantum computer (QC) comprises a control computer (µC) and
vii. the quantum computer (QC) comprises one or more qubits (QUB, QUP) and
viii. wherein the quantum computer (QC) comprises first means (M1) configured so,
l. establish and/or manipulate a superposition of quantum states of one or more quantum bits (QUB, QUP) of the quantum computer (QC)
m. setting a predetermined quantum state of one or more quantum bits (QUB, QUP) of the quantum computer (QC) and/or
n. setting a predetermined superposition of several predetermined quantum states of one or more quantum bits (QUB, QUP) of the quantum computer (QC) and/or
o. setting a predetermined entanglement of a plurality of predetermined quantum states of one or more quantum bits (QUB, QUP) of the quantum computer (QC), and
ix. - wherein the quantum computer comprises second means (M2) configured so as to determine and/or read a quantum state of one or more quantum bits (QUB, QUP) of the quantum computer (QC), and
-- wherein the quantum computer system (QUSYS) comprises, in addition to the control computer (µC) of the quantum computer (QC), a quantum computer monitoring apparatus (QUV) configured so as to monitor the quantum computer (QC), and
- wherein the quantum computer monitoring apparatus (QUV) is configured so as to carry out monitoring for malfunction of quantum computer system components, and
- wherein the quantum computer (QC) is configured so as to execute a quantum computer program with a quantum computer program sequence, and
- wherein the quantum computer monitoring apparatus (QUV) is configured so as to monitor the correct quantum computer program sequence of the quantum computer program of the quantum computer (QC), and
- wherein the quantum computer monitoring apparatus (QUV) comprises means (µCQUV, ICNT, ICLK) for monitoring the correct quantum computer program sequence of the quantum computer program of the quantum computer (QC), and
- wherein the quantum computer monitoring apparatus (QUV) is set up for the prevention of unauthorized and possibly hazardous states of these systems (GR, ZSE), which the quantum computer (QC) controls,
with the steps
- monitoring the correct quantum computer program sequence of the quantum computer program of the quantum computer (QC) by the quantum computer monitoring apparatus (QUV),
- wherein the monitoring of a correct program sequence means the prevention of unauthorized and possibly hazardous states of systems controlled by the quantum computer, and
- wherein monitoring a correct program sequence also means that errors in the quantum computer's quantum systems that may arise during operation are detected, and
- wherein these errors to be detected comprise hardware and/or software defects and/or malfunctions of the quantum computer (QC), and
-- wherein predetermined quantum computer calculations with at least one quantum operation for calculating predetermined quantum computer calculation results in predetermined time periods before predetermined time points, by the quantum computer (QC), and
- driving the quantum computer monitoring apparatus (QUV) after these predetermined times and performing a reset of the quantum computer (QC) to a predetermined or preset quantum computer program start state or the like if this driving of the quantum computer monitoring apparatus (QUV) is not performed in a predetermined manner.

## Revendications

1. Système d'ordinateurs quantiques (QUSYS)
- dans lequel le système d'ordinateurs quantiques (QUSYS) comprend un ordinateur quantique (QC) et
- dans lequel l'ordinateur quantique (QC) comprend un calculateur de commande (µC) et
- dans lequel l'ordinateur quantique (CQ) comprend un ou plusieurs bits quantiques (QUB, QUP) et
- dans lequel l'ordinateur quantique (QC) comprend des premiers moyens (Ml) qui sont conçus
- pour créer et/ou manipuler une superposition d'états quantiques d'un ou plusieurs bits quantiques (QUB, QUP) de l'ordinateur quantique (QC) et/ou
- pour régler un état quantique prédéterminé d'un ou plusieurs bits quantiques (QUB, QUP) de l'ordinateur quantique (QC) et/ou
- pour régler une superposition prédéterminée de plusieurs états quantiques prédéterminés d'un ou plusieurs bits quantiques (QUB, QUP) de l'ordinateur quantique (QC) et/ou
- pour régler un entrelacement prédéterminé de plusieurs états quantiques prédéterminés d'un ou plusieurs bits quantiques (QUB, QUP) de l'ordinateur quantique (QC), et
- dans lequel l'ordinateur quantique comprend des seconds moyens (M2) conçus pour déterminer et/ou lire un état quantique d'un ou plusieurs bits quantiques (QUB, QUP) de l'ordinateur quantique (QC), et
- dans lequel le système d'ordinateurs quantiques (QUSYS) comprend, en plus du calculateur de commande (µC) de l'ordinateur quantique (QC), un dispositif de surveillance d'ordinateur quantique (QUV) conçu pour surveiller l'ordinateur quantique (QC), et
- dans lequel le dispositif de surveillance d'ordinateur quantique (QUV) est conçu pour entreprendre une surveillance d'un dysfonctionnement de composants de système d'ordinateurs quantiques, et
- dans lequel l'ordinateur quantique (QC) est conçu pour exécuter un programme d'ordinateur quantique avec un flux de programme d'ordinateur quantique, et
- dans lequel le dispositif de surveillance d'ordinateur quantique (QUV) est conçu pour surveiller le flux de programme d'ordinateur quantique correct du programme d'ordinateur quantique de l'ordinateur quantique (QC), et
- dans lequel le dispositif de surveillance d'ordinateur quantique (QUV) comprend des moyens (µCQUV, ICNT, ICLK) pour surveiller le flux de programme d'ordinateur quantique correct du programme d'ordinateur quantique de l'ordinateur quantique (QC),
- dans lequel la surveillance d'un flux de programme correct signifie la prévention d'états non autorisés et, le cas échéant, dangereux de systèmes (GR, ZSE), qui commandent l'ordinateur quantique (QC) et
- dans lequel le dispositif de surveillance d'ordinateur quantique (QUV) est conçu pour prévenir les états non autorisés et, le cas échéant, dangereux de ces systèmes (GR, ZSE), qui commandent l'ordinateur quantique (QC) et
- dans lequel la surveillance du flux de programme correct signifie que le dispositif de surveillance d'ordinateur quantique (QUV) est conçu pour détecter des erreurs de l'ordinateur quantique (QC) survenant lors du fonctionnement,
- dans lequel ces erreurs à détecter comprennent les défauts matériels et/ou logiciels et/ou des dysfonctionnements de l'ordinateur quantique (QC), et
- dans lequel A) le dispositif de surveillance d'ordinateur quantique (QUV) est conçu, en cas de conclusion à une erreur par le dispositif de surveillance d'ordinateur quantique (QUV)
i. pour bloquer un appareil (GR) relié à l'ordinateur quantique (QC)
a. dans sa fonction pour une durée prédéfinie ou
b. pour l'amener dans un état sûr ou
c. pour prévenir l'accès de l'ordinateur quantique (QC) à l'appareil (GR) ou
d. pour relier l'appareil (GR) à un dispositif de simulation d'ordinateur quantique à la place de l'ordinateur quantique (QC) et/ou
ii.pour signaler l'apparition de cette erreur à l'ordinateur quantique (QC) ou à un système supérieur (ZSE) ou mettre à disposition une information sur cette erreur et dans lequel cette signalisation du dispositif de surveillance d'ordinateur quantique (QUV) a pour conséquence que cette signalisation e. réinitialise l'ordinateur quantique (QC) et/ou
f. place l'ordinateur quantique (QC) dans un état prédéterminé et/ou
g. place au moins un bit quantique (QUB) de l'ordinateur quantique (QC) dans un état prédéterminé et/ou
h. place au moins un bit quantique nucléaire (QUB) de l'ordinateur quantique (QC) dans un état prédéterminé et/ou
i. place au moins un registre quantique (QUREG) de l'ordinateur quantique (QC) dans un état prédéterminé et/ou
j. place au moins un registre quantique nucléaire (CQUREG) de l'ordinateur quantique (QC) dans un état prédéterminé et/ou
k. place au moins un registre quantique nucléaire-électronique (CEQUREG) de l'ordinateur quantique (QC) dans un état prédéterminé et/ou
- dans lequel B) le dispositif de surveillance d'ordinateur quantique (QUV) est conçu, lorsqu'il conclut à une erreur ou un état défectueux de l'ordinateur quantique (QC), pour réaliser une ou plusieurs des contre-mesures suivantes :
i. réalisation de calculs d'ordinateur quantique prédéterminés pour le test de l'ordinateur quantique (QC) et/ou
ii.mise hors service de l'ordinateur quantique (QC) concerné et/ou
iii. remplacement de l'ordinateur quantique (QC) par un dispositif de simulation d'ordinateur quantique pour garantir un fonctionnement d'urgence et/ou
iv.signalement d'une erreur à une unité supérieure et/ou un utilisateur et/ou
v. déplacement du système d'ordinateurs quantiques (QUSYS) dans un état de fonctionnement d'urgence.

2. Système d'ordinateurs quantiques (QUSYS) selon la revendication 1
- dans lequel le dispositif de surveillance d'ordinateur quantique (QUV) est conçu pour surveiller au moins la valeur et/ou l'évolution de la valeur de l'un des paramètres de fonctionnement suivants et détecter dans ce but :
- une valeur d'une tension de fonctionnement d'une ligne de tension de fonctionnement (VDD) du système d'ordinateurs quantiques (QUSYS) par rapport à un potentiel de référence (GND) et/ou
- une valeur d'une consommation de courant (IDD) associée à cette ligne de tension de fonctionnement (VDD) du système d'ordinateurs quantiques (QUSYS) et/ou
- une valeur d'une tension de fonctionnement d'une ligne de tension de fonctionnement (VDD) de l'ordinateur quantique (QC) par rapport à un potentiel de référence (GND) et/ou une valeur d'une consommation de courant (IDD) associée à cette tension de fonctionnement de l'ordinateur quantique (QC) et/ou
- une valeur d'une tension de fonctionnement d'une partie de dispositif de l'ordinateur quantique (QC) par rapport à un potentiel de référence (GND) et/ou
- une valeur d'une consommation de courant associée à une tension de fonctionnement d'une partie de dispositif de l'ordinateur quantique (QC) et/ou
- l'horloge de processeur (QCCLK) d'un calculateur de commande (µC) faisant, le cas échéant, partie de l'ordinateur quantique (QC), et/ou
- la valeur de la fréquence de l'horloge de processeur (QCCLK) du calculateur de commande (µC) faisant, le cas échéant, partie de l'ordinateur quantique (QC), et/ou
- l'émission de lumière d'une source lumineuse (LED) d'un ordinateur quantique (QC) pour irradier les bits quantiques (QUB) de l'ordinateur quantique (QC) avec un rayonnement et/ou
- la capacité de détection du rayonnement électromagnétique d'un photodétecteur et/ou
- la production correcte, conformément à la destination, de champs électromagnétiques, en particulier de micro-ondes et/ou de champs d'ondes radio d'un dispositif de l'ordinateur quantique (QC) pour la manipulation d'un ou plusieurs bits quantiques (QUB) et/ou
- la conductance complexe et/ou réelle et/ou imaginaire d'une ligne faisant partie d'un dispositif de l'ordinateur quantique (QC) pour la manipulation d'un ou plusieurs bits quantiques (QUB), et
- dans lequel le dispositif de surveillance d'ordinateur quantique (QUV) est conçu pour déterminer les valeurs mesurées pour les paramètres de fonctionnement surveillés, et
- dans lequel le dispositif de surveillance d'ordinateur quantique (QUV) est conçu pour comparer ces valeurs mesurées avec des valeurs seuil et/ou des intervalles de tolérance prédéfinis pour ces valeurs mesurées de ces paramètres de fonctionnement, et
- dans lequel le dispositif de surveillance d'ordinateur quantique (QUV) est conçu, lorsque les valeurs mesurées sont situées en dehors des plages de valeurs qui sont marquées par les valeurs seuil et/ou les intervalles de tolérance prédéfinis comme admissibles, pour initier des contre-mesures.

3. Système d'ordinateurs quantiques (QUSYS) selon la revendication 1 ou 2,
- dans lequel le système d'ordinateurs quantiques comprend au moins deux ordinateurs quantiques,
- l'ordinateur quantique (QC), qui est désormais appelé premier ordinateur quantique (QC1), et
- un second ordinateur quantique (QC2), et
- dans lequel une signalisation d'un résultat de calcul d'ordinateur quantique peut être effectuée par l'intermédiaire d'au moins une liaison de signalisation (DB) du premier ordinateur quantique (QC1) au second ordinateur quantique (QC2) et
- dans lequel le second ordinateur quantique (QC2) est conçu, au moins temporairement, pour travailler en tant que dispositif de surveillance d'ordinateur quantique (QUV) du premier ordinateur quantique (QC1), et
- dans lequel le second ordinateur quantique (QC2) est conçu pour conclure à un état d'erreur du premier ordinateur quantique (QC1) lorsque le résultat de calcul d'ordinateur quantique du premier ordinateur quantique (QC1) ne se trouve pas dans l'ensemble de solution admissible prédéterminé pour le résultat de calcul d'ordinateur quantique du premier ordinateur quantique (QC1), et
- dans lequel le second ordinateur quantique (QC2) est conçu, dans le cas de la conclusion à une erreur, pour signaler l'apparition de cette erreur au premier ordinateur quantique (QC1) ou à un système supérieur (ZSE) et/ou à mettre à disposition une information sur ladite erreur.

4. Système d'ordinateurs quantiques (QUSYS) selon la revendication 3
- dans lequel le système d'ordinateurs quantiques (QUSYS) comprend plus d'exactement un appareil de mesure pour la détection de grandeurs de fonctionnement du système d'ordinateurs quantiques (QUSYS) et/ou pour la détection de grandeurs de fonctionnement d'un dispositif et/ou pour la détection de grandeurs de fonctionnement d'un système et
- dans lequel, le cas échéant, les états de ce dispositif dépendent du système d'ordinateurs quantiques (QUSYS) ou dans lequel, le cas échéant, les états de ce système dépendent du système d'ordinateurs quantiques (QUSYS) et
- dans lequel le premier ordinateur quantique (QC1) réalise un premier calcul d'ordinateur quantique et
- dans lequel le second ordinateur quantique (QC2) réalise également ce premier calcul d'ordinateur quantique au moins temporairement et/ou en différé et
- dans lequel le premier calcul d'ordinateur quantique, lors de la réalisation par le premier ordinateur quantique (QC1), comprend une mesure de surveillance visant à surveiller le bon fonctionnement du premier ordinateur quantique (QC1) et
- dans lequel le premier calcul d'ordinateur quantique, lors de la réalisation par le second ordinateur quantique (QC2), comprend une mesure de surveillance visant à surveiller le bon fonctionnement du second ordinateur quantique (QC2) et
- dans lequel le premier ordinateur quantique (QC1) réalise le calcul d'ordinateur quantique du premier ordinateur quantique (QC1) indépendamment du calcul d'ordinateur quantique du second ordinateur quantique (QC2) et
- dans lequel la valeur attendue est le résultat de calcul d'ordinateur quantique du calcul d'ordinateur quantique du second ordinateur quantique (QC2) et
- dans lequel le second ordinateur quantique (QC2) est conçu, au moins temporairement, pour travailler en tant que dispositif de surveillance d'ordinateur quantique (QUV) du premier ordinateur quantique (QC1), et
- dans lequel le second ordinateur quantique (QC2) est conçu pour faire réaliser plusieurs fois le calcul d'ordinateur quantique prédéterminé par le premier ordinateur quantique (QC1) et pour comparer la fréquence respective des résultats de calcul d'ordinateur quantique attendus avec des valeurs attendues respectives pour les résultats de calcul d'ordinateur quantique effectivement transmis par le premier ordinateur quantique (QC1) au second ordinateur quantique (QC2), et
- dans lequel le second ordinateur quantique (QC2) est conçu pour conclure à une erreur si cette fréquence respective des résultats de calcul d'ordinateur quantique effectivement transmis du premier ordinateur quantique (QC1) au second ordinateur quantique (QC2) s'écarte des valeurs attendues respectives pour la fréquence respective des résultats de calcul d'ordinateur quantique attendus pour une ou plusieurs valeurs attendues de plus d'une tolérance d'écart de valeur attendue respective.

5. Système d'ordinateurs quantiques (QUSYS) selon l'une quelconque des revendications 1 à 2
- dans lequel l'ordinateur quantique (QC) comprend
- - des bits quantiques et
- - un calculateur de commande (µC) et
- - des premiers moyens de manipulation de bits quantiques de l'ordinateur quantique (QC) et
- - des seconds moyens de lecture de l'état de bits quantiques de l'ordinateur quantique (QC) et
- dans lequel les premiers moyens de manipulation de bits quantiques de l'ordinateur quantique (QC) sont commandés par le calculateur de commande (µC) et
- dans lequel les seconds moyens de lecture de l'état de bits quantiques de l'ordinateur quantique (QC) sont commandés par le calculateur de commande (µC) et
- dans lequel le dispositif de surveillance d'ordinateur quantique (QUV) comprend des moyens pour l'observation du flux de programme d'ordinateur quantique d'un programme d'ordinateur quantique pouvant être exécuté sur le calculateur de commande (µC) de l'ordinateur quantique (QC) et
- dans lequel le dispositif de surveillance d'ordinateur quantique (QUV) surveille ce flux de programme d'ordinateur quantique du programme d'ordinateur quantique pouvant être exécuté sur au moins le calculateur de commande (µC) de l'ordinateur quantique (QC) et
- dans lequel le dispositif de surveillance d'ordinateur quantique (QUV)
- lors d'une manipulation d'une quantité partielle de bits quantiques des bits quantiques de l'ordinateur quantique (QC) pendant la durée du programme d'ordinateur quantique, déclenche une condition d'exception (Exception), sous forme d'une interruption (Interrupt) du flux de programme d'ordinateur quantique ou d'une autre mesure en fonction du type de condition d'exception remplie.

6. Système d'ordinateurs quantiques (QUSYS) selon l'une quelconque des revendications 1 à 5
- dans lequel l'ordinateur quantique (QC) comprend une mémoire en lecture seule ou une mémoire flash ou une autre mémoire non volatile (NVM) et,
- dans lequel un programme d'ordinateur quantique est mémorisé sur la mémoire en lecture seule ou la mémoire flash ou l'autre mémoire non volatile (NVM), lequel programme peut être exécuté sur au moins le calculateur de commande (µC) de l'ordinateur quantique (QC).

7. Système d'ordinateurs quantiques (QUSYS) selon l'une quelconque des revendications 1 à 6,
- dans lequel le système d'ordinateurs quantiques (QUSYS) comprend un ordinateur quantique (QC) présentant au moins un calculateur de commande (µC) et le dispositif de surveillance d'ordinateur quantique (QUV),
- dans lequel au moins un programme d'ordinateur quantique peut être exécuté sur l'au moins un calculateur de commande (µC) et
- dans lequel le dispositif de surveillance d'ordinateur quantique (QUV) surveille le flux du programme d'ordinateur quantique pendant la durée du programme d'ordinateur quantique et, lors d'un accès à une zone d'adresse déterminée (AB) au sein d'une mémoire (MEM) de l'ordinateur quantique (QC), déclenche une condition d'exception (Exception), en particulier une interruption (Interrupt) du programme d'ordinateur quantique,
- dans lequel l'ordinateur quantique (QC) présente des moyens pour la réalisation d'une routine de condition d'exception (Exception-Routine) après le déclenchement d'une condition d'exception pendant la durée du programme d'ordinateur quantique,
- dans lequel ces moyens comprennent une logique de réinitialisation et/ou une logique d'interruption du calculateur de commande (µC) qui fixent alors le pointeur de programme et/ou le pointeur de pile du calculateur de commande (µC) à des valeurs prédéterminées.

8. Procédé d'exploitation d'un système d'ordinateurs quantiques (QUSYS),
- dans lequel le système d'ordinateurs quantiques (QUSYS) comprend un ordinateur quantique (QC) et
vi. - dans lequel l'ordinateur quantique (QC) comprend un calculateur de commande (µC) et
vii. - dans lequel l'ordinateur quantique (QC) comprend un ou plusieurs bits quantiques (QUB, QUP) et
viii. - dans lequel l'ordinateur quantique (QC) comprend des premiers moyens (Ml) conçus
l. pour créer et/ou manipuler une superposition d'états quantiques d'un ou plusieurs bits quantiques (QUB, QUP) de l'ordinateur quantique (QC) et/ou
m. pour régler un état quantique prédéterminé d'un ou plusieurs bits quantiques (QUB, QUP) de l'ordinateur quantique (QC) et/ou
n. pour régler une superposition prédéterminée de plusieurs états quantiques prédéterminés d'un ou plusieurs bits quantiques (QUB, QUP) de l'ordinateur quantique (QC) et/ou
o. pour régler un entrelacement prédéterminé de plusieurs états quantiques prédéterminés d'un ou plusieurs bits quantiques (QUB, QUP) de l'ordinateur quantique (QC), et
ix. - dans lequel l'ordinateur quantique comprend des seconds moyens (M2), lesquels sont conçus pour déterminer et/ou lire un état quantique d'un ou plusieurs bits quantiques (QUB, QUP) de l'ordinateur quantique (QC), et
- dans lequel le système d'ordinateurs quantiques (QUSYS) comprend, en plus du calculateur de commande (µC) de l'ordinateur quantique (QC), un dispositif de surveillance d'ordinateur quantique (QUV) conçu pour surveiller l'ordinateur quantique (QC), et
- dans lequel le dispositif de surveillance d'ordinateur quantique (QUV) est conçu pour entreprendre une surveillance d'un dysfonctionnement de composants de système d'ordinateurs quantiques, et
- dans lequel l'ordinateur quantique (QC) est conçu pour exécuter un programme d'ordinateur quantique avec un flux de programme d'ordinateur quantique, et
- dans lequel le dispositif de surveillance d'ordinateur quantique (QUV) est conçu pour surveiller le flux de programme d'ordinateur quantique correct du programme d'ordinateur quantique de l'ordinateur quantique (QC), et
- dans lequel le dispositif de surveillance d'ordinateur quantique (QUV) comprend des moyens (µCQUV, ICNT, ICLK) pour surveiller le flux de programme d'ordinateur quantique correct du programme d'ordinateur quantique de l'ordinateur quantique (QC), et
- dans lequel le dispositif de surveillance d'ordinateur quantique (QUV) est conçu pour prévenir les états non autorisés et, le cas échéant, dangereux de ces systèmes (GR, ZSE), qui commandent l'ordinateur quantique (QC),
comportant les étapes
- de surveillance du flux de programme d'ordinateur quantique correct du programme d'ordinateur quantique de l'ordinateur quantique (QC) par le dispositif de surveillance d'ordinateur quantique (QUV),
- dans lequel la surveillance d'un flux de programme correct signifie la prévention d'états non autorisés et, le cas échéant, dangereux de systèmes, qui sont commandés par l'ordinateur quantique et
- dans lequel la surveillance d'un flux de programme correct signifie également que des erreurs dans les systèmes quantiques de l'ordinateur quantique, qui peuvent survenir pendant le fonctionnement, sont détectées et
- dans lequel ces erreurs à détecter comprennent les défauts matériels et/ou logiciels et/ou des dysfonctionnements de l'ordinateur quantique (QC), et
- de réalisation de calculs d'ordinateur quantique prédéterminés comportant au moins une opération quantique pour le calcul de résultats de calcul d'ordinateur quantique prédéterminés pendant des durées prédéterminées avant des instants prédéterminés, par l'ordinateur quantique (QC), et
- de commande du dispositif de surveillance d'ordinateur quantique (QUV) après ces instants prédéterminés et de réalisation d'une réinitialisation (Fonction de réinitialisation) de l'ordinateur quantique (QC) à un état prédéfini ou pré-réglé de début de programme d'ordinateur quantique ou similaire, lorsque cette commande du dispositif de surveillance d'ordinateur quantique (QUV) ne s'effectue pas d'une manière prédéterminée.
